# EUROPEAN PATENT SPECIFICATION

(11) **EP 3 401 931 B1**
(45) Date of publication and mention of the grant of the patent: **10.06.2020**
(21) Application number: 17207945.1
(22) Date of filing: 18.12.2017
(51) Int. Cl.: H01C 7/12, H01H 37/76

(54) **SURGE PROTECTIVE DEVICE MODULES INCLUDING INTEGRAL THERMAL DISCONNECT MECHANISMS AND METHODS INCLUDING SAME**
ÜBERSPANNUNGSSCHUTZVORRICHTUNGSMODULE MIT INTEGRIERTEN THERMISCHEN TRENNMECHANISMEN UND VERFAHREN DAMIT
MODULES DE DISPOSITIF DE PROTECTION CONTRE LES SURTENSIONS COMPRENANT DES MÉCANISMES DE DÉCONNEXION THERMIQUE INTÉGRÉS ET PROCÉDÉS LES COMPRENANT

(30) Priority: 12.05.2017 US 201715593591
(43) Date of publication of application: 14.11.2018
(60) Divisional application: 20168856.1
(73) Proprietor: Raycap IP Development Ltd., Nicosia (CY)
(72) Inventor: VRHUNC, Jure, 1211 Ljubljana-Smartno (SI); KAMENSEK, Sebastjan, 4220 Skofja Loka (SI); KNEZ, Tadej, 1290 Grosuplje (SI); JURICEV, Igor, 6310 Izola (SI); TSOVILIS, Thomas, 1000 Ljubljana (SI)
(74) Representative: Yeadon IP Limited

(56) References cited:
- WO-A1-2008/104824
- FR-A1- 2 897 231
- US-A1- 2013 038 976
- US-A1- 2015 280 420

## Description

### Field of the Invention

The present disclosure relates to surge protective devices and, more particularly but not exclusively, to surge protective devices including thermal disconnectors and alerting mechanisms. Aspects of the invention relate to a surge protective device module, to a surge protective device and to a method.

### Background of the Invention

Frequently, excessive voltage or current is applied across service lines that deliver power to residences and commercial and institutional facilities. Such excess voltage or current spikes (transient overvoltages and surge currents) may result from lightning strikes, for example. The above events may be of particular concern in telecommunications distribution centers, hospitals and other facilities where equipment damage caused by overvoltages and/or current surges is not acceptable and resulting down time may be very costly.

Typically, sensitive electronic equipment may be protected against transient overvoltages and surge currents using surge protective devices (SPDs). For example, an overvoltage protection device may be installed at a power input of equipment to be protected, which is typically protected against overcurrents when it fails. Typical failure mode of an SPD is a short circuit. The overcurrent protection typically employed is a combination of an internal thermal disconnector to protect the device from overheating due to increased leakage currents and an external fuse to protect the device from higher fault currents. Different SPD technologies may avoid the use of the internal thermal disconnector because, in the event of failure, they change their operation mode to a low ohmic resistance.

In the event of a surge current in a line L (*e*.*g*., a voltage line of a three phase electrical power circuit), protection of power system load devices may necessitate providing a current path to ground for the excess current of the surge current. The surge current may generate a transient overvoltage between the line L and the neutral line N (the neutral line N may be conductively coupled to an earth ground PE). Since the transient overvoltage significantly exceeds the operating voltage of the SPD, the SPD will become conductive, allowing the excess current to flow from line L through SPD to the neutral N. Once the surge current has been conducted to neutral N, the overvoltage condition ends and the SPD may become non-conducting again. However, in some cases, one or more SPDs may begin to allow a leakage current to be conducted even at voltages that are lower that the operating voltage of the SPDs. Such conditions may occur in the case of an SPD deteriorating. It is an aim of embodiments of the present disclosure to improve upon such known devices.
US2013/038976 discloses providing a thermally-protected varistor (TPV) device that includes a voltage-sensitive body; a first conductive lead frame adjacent the voltage-sensitive body; a second conductive lead frame adjacent the voltage-sensitive body and including a raised pad; a first conducting terminal including an end portion for contacting the raised pad when the TPV device is in a first, conducting position; a fusible material releasably connecting the end portion to the raised pad of the second conductive lead frame when the TPV device is in a first, conducting position; and a biasing element biasing the end portion such that the end portion of the first conducting terminal is configured to move away from the raised pad of the second lead frame when the temperature-sensitive fusible material releases the end portion of the first conducting terminal from the raised pad in response to heat generated by the voltage-sensitive body.

### Summary

There is provided a surge protective device (SPD) module according to claim 1. Embodiments comprising optional features are set out in the dependent claims.

According to embodiments of the present disclosure, a surge protective device (SPD) module includes a module housing, first and second module electrical terminals mounted on the module housing, an overvoltage clamping element electrically connected between the first and second module electrical terminals, and a thermal disconnector mechanism. The thermal disconnector mechanism is positioned in a ready configuration, wherein the overvoltage clamping element is electrically connected with the second module electrical terminal. The thermal disconnector mechanism is repositionable to electrically disconnect the overvoltage clamping element from the second module electrical terminal. The thermal disconnector mechanism includes: an electrode electrically connected to the overvoltage clamping element; a disconnect spring elastically deflected and electrically connected to the electrode in the ready configuration; a solder securing the disconnect spring in electrical connection with the electrode in the ready configuration; and a heat sink member thermally interposed between the electrode and the solder, the heat sink member having a thermal capacity. The solder is meltable in response to overheating of the overvoltage clamping element. The disconnect spring is configured to electrically disconnect the overvoltage clamping element from the second module electrical terminal when the solder is melted. The thermal capacity of the heat sink member buffers and dissipates heat from the overvoltage clamping element to prevent the solder from melting in response to at least some surge currents through the SPD module The electrode includes: a base portion engaging the overvoltage clamping element; and an integral upstanding termination tab connecting the base portion to the heat sink member.

In some embodiments, the thermal capacity of the heat sink member is in the range of from about 0.2 to 2.0 J/K.

In some embodiments, the thermal capacity of the heat sink member is at least about 0.15 times a thermal capacity of the electrode. In some embodiments, the overvoltage clamping element is a varistor.

According to some embodiments, the heat sink member is affixed to the electrode, and the solder directly engages the heat sink member. In some embodiments, the heat sink member is affixed to the electrode by rivets.

According to some embodiments, the SPD module includes a support frame, and the support frame includes an integral support feature configured to resist displacement of the heat sink member relative to the disconnect spring.

In some embodiments, the SPD module includes a supplemental spring. In the ready configuration, the supplemental spring is electrically connected to the electrode, applies a spring load to the disconnect spring, and provides thermal capacity to cool the disconnect spring.

In some embodiments, the disconnect spring is formed of a material having a softening temperature greater than 300°C.

According to some embodiments, the thermal disconnector mechanism includes: a first fail-safe mechanism including the solder and a contact portion of the disconnect spring engaging the solder; and a second fail-safe mechanism including a weak region in the disconnect spring between the contact portion and a proximal portion of the disconnect spring, wherein the disconnect spring is configured to break at the weak region in response to a current through the disconnect spring. In some embodiments, the weak region has a reduced cross-sectional area compared to a cross-sectional area of the proximal portion. In some embodiments, the SPD module includes a supplemental spring that applies a spring load to the proximal portion.

According to some embodiments, the SPD module includes a contact member, wherein: the contact member includes the second module terminal; and the disconnect spring is affixed to the contact member. In some embodiments, the disconnect spring is affixed to the contact member by clinching.

According to some embodiments, the SPD module includes an indicator mechanism configured to provide an alert that the SPD module has failed when the thermal disconnector mechanism disconnects the overvoltage clamping element from the second module electrical terminal. In some embodiments, the indicator mechanism includes a local alert mechanism including: a window in the module housing; an indicator member movable between a ready position and an indicating position relative to the window; and an indicator spring configured to force the indicator member from the ready position to the indicating position when the thermal disconnector mechanism disconnects the overvoltage clamping element from the second module electrical terminal. In some embodiments, the indicator mechanism includes a remote alert mechanism including: a switch opening in the module housing to receive a switch pin from an external base assembly; a blocking member covering the switch opening; and an indicator spring configured to force the blocking member away from the switch opening when the thermal disconnector mechanism disconnects the overvoltage clamping element from the second module electrical terminal to permit the switch pin to extend through the switch opening.

In some examples described herein, a surge protective device (SPD) module includes a module housing, first and second module electrical terminals mounted on the module housing, an overvoltage clamping element electrically connected between the first and second module electrical terminals, and a thermal disconnector mechanism positioned in a ready configuration, wherein the overvoltage clamping element is electrically connected with the second module electrical terminal. The thermal disconnector mechanism may be repositionable to electrically disconnect the overvoltage clamping element from the second module electrical terminal. The thermal disconnector mechanism may include one or more of: an electrode electrically connected to the overvoltage clamping element; a disconnect spring elastically deflected and electrically connected to the electrode in the ready configuration; a first fail-safe mechanism including a solder securing the disconnect spring in electrical connection with the electrode in the ready configuration, wherein: the solder may be meltable in response to overheating of the overvoltage clamping element; and the disconnect spring may be configured to electrically disconnect the overvoltage clamping element from the second module electrical terminal when the solder is melted; and a second fail-safe mechanism including a weak region in the disconnect spring, wherein the disconnect spring may be configured to break at the weak region in response to a current through the disconnect spring to electrically disconnect the overvoltage clamping element from the second module electrical terminal.

In some examples described herein, a method for forming a surge protective device (SPD) system includes providing an SPD module including: a module housing; first and second module electrical terminals mounted on the module housing; and an overvoltage clamping element electrically connected between the first and second module electrical terminals. The SPD module may have a prescribed maximum continuous operating voltage (MCOV) level. The SPD module may have a prescribed type. The method may further include providing an SPD base including one or more of: a base housing; and first and second base electrical terminals mounted on the base housing. The SPD base may have a prescribed maximum continuous operating voltage (MCOV) level. The SPD base may have a prescribed type. The method may further include one or more of: mounting a module voltage designator member on the module housing in a selected position, wherein the selected position corresponds to the prescribed MCOV level of the SPD module and is one of a plurality of selectable positions each corresponding to a different prescribed MCOV level; mounting a module type designator member on the module housing in a selected position, wherein the selected position corresponds to the prescribed type of the SPD module and is one of a plurality of selectable positions each corresponding to a different type; mounting a base voltage designator member on the base housing in a selected position, wherein the selected position corresponds to the prescribed MCOV level of the SPD base and is one of a plurality of selectable positions each corresponding to a different prescribed MCOV level; and mounting a base type designator member on the base housing in a selected position, wherein the selected position corresponds to the prescribed type of the SPD base and is one of a plurality of selectable positions each corresponding to a different type. The SPD module can be plugged into the SPD base in an installed position wherein the first and second module electrical terminals electrically engage the first and second base electrical terminals, the module voltage designator member is mated with the base voltage designator member, and the module type designator member is mated with the base type designator member. If a user attempts to plug a second SPD module having a module voltage designator member positioned to correspond to a different MCOV level than that of the SPD base and/or a module type designator member positioned to correspond to a different type than that of the SPD base into the SPD base, the base voltage designator member and/or the base type designator member will prevent the second SPD module from being mounted in the installed position.

In some examples described herein, the module voltage designator member and the module type designator member each include an integral pin, the base voltage designator member includes an integral socket configured to receive the pin of the module voltage designator member, and the base type designator member includes an integral socket configured to receive the pin of the module type designator member.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

Further features, advantages and details of the present invention will be appreciated by those of ordinary skill in the art from a reading of the figures and the detailed description of the embodiments that follow, such description being merely illustrative of the present invention.

### Brief Description of the Drawings

The accompanying drawings, which form a part of the specification, illustrate example embodiments of the present invention.
**FIG. 1** is a top, front perspective view of an SPD assembly according to embodiments of the invention mounted on a DIN rail;
**FIG. 2** is an exploded, front, right side perspective view of an SPD module forming a part of the **SPD** assembly of **FIG. 1****;**
**FIG. 3** is an exploded, rear, left side view of the SPD module of **FIG. 2****;**
**FIG. 4** is an exploded, front, right side view of an overvoltage clamping element assembly forming a part of the SPD module of **FIG. 2****;**
**FIG. 5** is an exploded, front, left side view of the overvoltage clamping element assembly of **FIG. 4****;**
**FIG. 6** is a left side view of the SPD module of **FIG. 2** with a cover thereof removed;
**FIG. 7** is a cross-sectional view of the SPD module of **FIG. 2** taken along the line **7-7** of **FIG. 6****;**
**FIG. 8** is a front, bottom perspective view of the SPD module of **FIG. 2** with the cover removed;
**FIG. 9** is a right side view of the SPD module of **FIG. 2** with the cover removed and a thermal disconnector mechanism thereof in a ready configuration;
**FIG. 10** is a right side view of the SPD module of **FIG. 2** with the cover removed and the thermal disconnector mechanism thereof in a first tripped configuration;
**FIG. 11** is a right side view of the SPD module of **FIG. 2** with the cover removed and the thermal disconnector mechanism thereof in a second tripped configuration;
**FIG. 12** is an exploded, front, bottom, right perspective view of a base assembly forming a part of the SPD assembly of **FIG. 1****;**
**FIG. 13** is a cross-sectional view of the base assembly of **FIG. 12** taken along the line **13-13** of **FIG. 1****;**
**FIG. 14** is a schematic electrical circuit diagram of an electrical circuit including the SPD assembly of **FIG. 1****;**
**FIG. 15** is an enlarged, fragmentary, rear view of the module of **FIG. 2** showing designator pins thereof;
**FIG. 16** is an enlarged, fragmentary, front view of the base of **FIG. 12** showing designator sockets thereof;
**FIG. 17** is a perspective view of a spring/contact assembly according to further embodiments of the invention. and
**FIG. 18** is a side view of the spring/contact assembly of **FIG. 17****;**

### Detailed Description of Embodiments of the Invention

Embodiments of the present invention will now be described, by way of example only, with reference to the accompanying drawings. In the drawings, the relative sizes of regions or features may be exaggerated for clarity. This invention may, however, be embodied in many different forms and should not be construed as limited to the embodiments set forth herein; rather, these embodiments are provided so that this disclosure will be thorough and complete, and will fully convey the scope of the invention to those skilled in the art.

It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present. Like numbers refer to like elements throughout.

In addition, spatially relative terms, such as "under", "below", "lower", "over", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "under" or "beneath" other elements or features would then be oriented "over" the other elements or features. Thus, the exemplary term "under" can encompass both an orientation of over and under. The device may be otherwise oriented (rotated 90 degrees or at other orientations) and the spatially relative descriptors used herein interpreted accordingly.

Well-known functions or constructions may not be described in detail for brevity and/or clarity.

As used herein the expression "and/or" includes any and all combinations of one or more of the associated listed items.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, "monolithic" means an object that is a single, unitary piece formed or composed of a material without joints or seams. Alternatively, a unitary object can be a composition composed of multiple parts or components secured together at joints or seams.

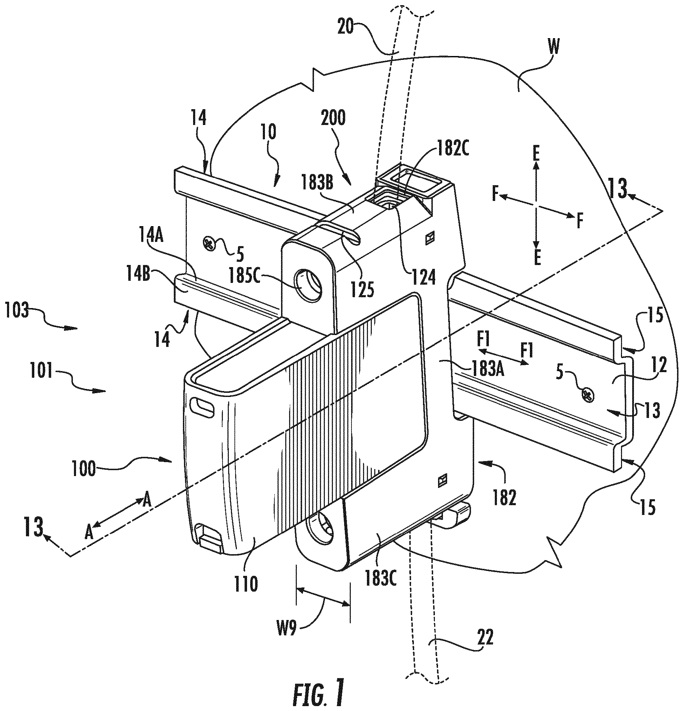

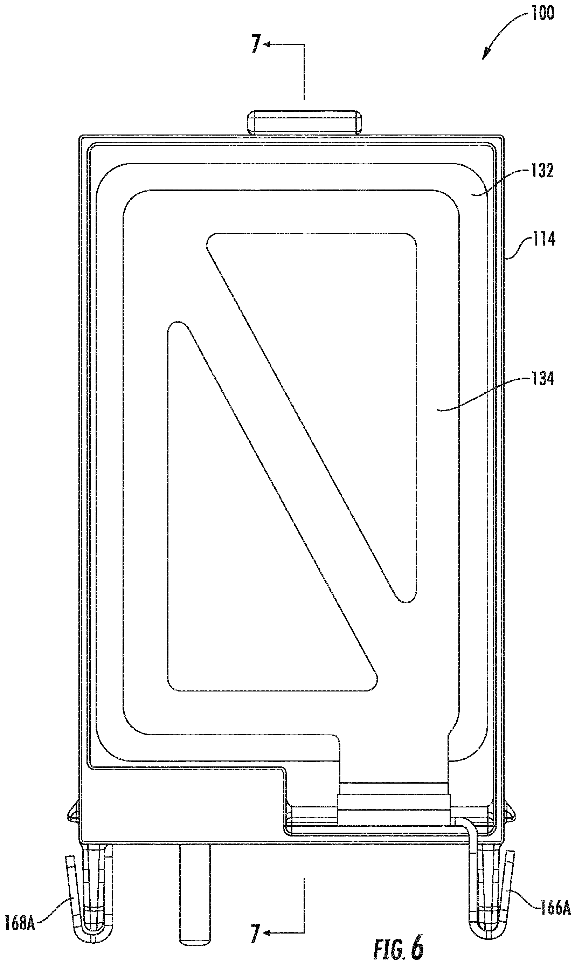

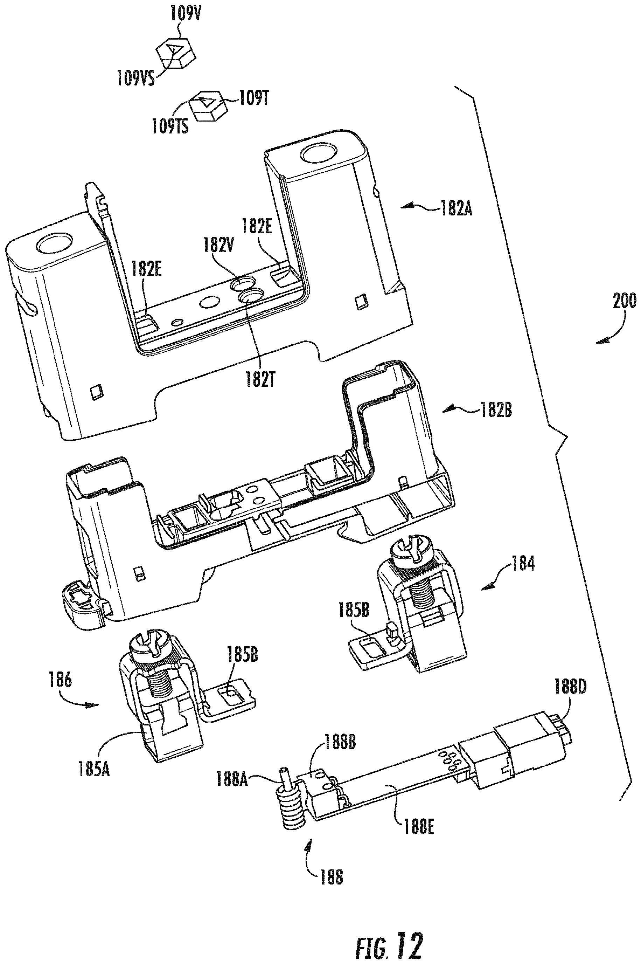

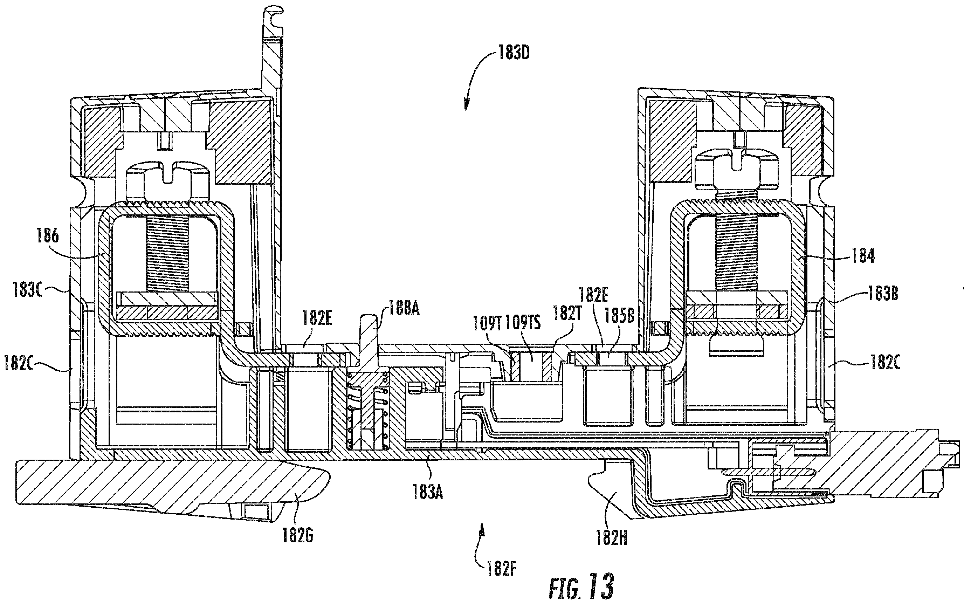

With reference to **FIGS. 1-13****,** a transient voltage surge suppression (TVSS) or surge protective device (SPD) assembly **101** and an SPD system **103** according to embodiments of the present invention are shown therein. The SPD assembly **101** and system **103** include an SPD module **100** and a pedestal or base **200.** The SPD module **100** is pluggable into the base **200.**

According to some embodiments and as shown, the SPD assembly **101** is configured, sized and shaped for mounting on a support rail **10** *(e.g.,* DIN rail **10** shown in **FIG. 1**) and is compliant with corresponding applicable DIN requirements or standards. The DIN rail **10** may be secured *(e.g.,* by screws **5** or other fasteners) to a suitable support structure such as a wall **W**, for example, a rear wall of an electrical service utility cabinet. The base **200** is removably mountable on the DIN rail **10.** The pluggable surge protective device (SPD) module **100** is in turn removably mountable on the base **200.**

In some embodiments, the maximum dimensions of the SPD assembly **101** are compliant with at least one of the following DIN (Deutsches Institut fur Normung e.V.) Standards: DIN 43 880 (December 1988). In some embodiments, the maximum dimensions of the assembly **101** are compliant with each of these standards.

According to some embodiments and as shown, the rail **10** is a DIN rail. That is, the rail **10** is a rail sized and configured to meet DIN specifications for rails for mounting modular electrical equipment.

The DIN rail **10** has a rear wall **12** and integral, lengthwise flanges **14** extending outwardly from the rear wall **12.** Each flange **14** includes a forwardly extending **wall 14A** and an outwardly extending wall **14B**. The walls **12, 14** together form a lengthwise extending front, central channel **13** and opposed, lengthwise extending, rear, edge channels **15.** Mounting holes **16** may be provided extending fully through the wall **12** and to receive fasteners (*e*.*g*., threaded fasteners or rivets) for securing the rail **10** to a support structure (*e*.*g*., a wall or panel). The DIN rail **10** defines a DIN rail plane **E-F** and has a lengthwise axis **F1-F1** extending in the plane **E-F.** DIN rails of this type may be referred to as "top hat" support rails.

According to some embodiments, the rail **10** is a 35 mm (width) DIN rail. According to some embodiments, the rail **10** is formed of metal and/or a composite or plastic material.

The assembly **100** has a DIN rail device assembly axis **A-A** (**FIG. 1**) that extends transversely to and, in some embodiments, substantially perpendicular to the axis **F1-F1** of the DIN rail **10.** In some embodiments, the DIN rail mount assembly axis **A-A** extends transversely to and, in some embodiments, substantially orthogonal to the plane **E-F** of the DIN rail **10.** As used herein, "front" or "distal" refers to the end farther away from the DIN rail **10** when the assembly **101** is mounted on the DIN rail **10,** and "rear" or "proximal" refers to the end nearer the DIN rail **10.**

The base **200** (**FIGS. 1****,** **12** and **13**) includes a rear housing member **182B** and a front housing member or cover **182A** collectively forming a housing **182.** The housing **182** includes a rear section **183A,** an upper leg or section **183B**, and a lower leg or section **183C.** The housing **182** defines an enclosed internal cavity. According to some embodiments, the housing members **182A, 182B** are formed of an electrically insulating polymeric material.

The housing members **182A, 182B** may be formed of any suitable material or materials. In some embodiments, each of the housing members **182A, 182B** are formed of a rigid polymeric material or metal (e.g., aluminum). Suitable polymeric materials may include polyamide (PA), polypropylene (PP), polyphenylene sulfide (PPS), or ABS, for example.

A DIN rail receiver channel **182F** is defined in the rear side of the rear section **183A.** Integral rail hook features **182H** are located on one side of the channel **182F** and a spring loaded DIN rail latch mechanism **182G** is mounted on the other side of the channel **182F.** The features and components **182F, 182G, 182H** are sized and configured to securely and releasably mount the base **200** on a standard DIN rail **10** as is known in the art.

A receiver slot **183D** is defined in the front side of the base **200** by the sections **183A-C.** The receiver slot **183D** has a front opening and is open on either side. The receiver slot **183D** extends axially from the opening along the axis **A-A** and is terminated by the front side of the rear section **183A.**

A base terminal electrical connector assembly **184, 186** is mounted in each of the upper and lower sections **183B, 183C.** Each connector assembly **184, 186** includes a cable clamp connector **185A** and a terminal contact connector socket **185B**. A cable port **182C** is defined in each of the upper and lower sections **183B**, **183C** to receive a terminal end of an electrical cable **20, 22** into the corresponding cable clamp connector **185A.** A driver port **185C** is provided in each section **183B, 183C** to receive a driver to operate a threaded member (*e*.*g*., screw) **185D** of the associated cable clamp connector **185A.**

Upper and lower contact openings **182E** are defined in the front side or wall of the rear section **183A.** Designator pin openings **182V** and **182T** are also defined in the front side or wall of the rear section **183A.**

A voltage designator socket member or insert **109V** is secured in *(e.g.,* press-fit into) the opening **182V.** A type designator socket member or insert **109T** is secured in *(e.g.,* press-fit into) the opening **182T.** The inserts **109V** and **109T** include sockets **109VS** and **109TS,** respectively, defined therein.

A switch **188** is disposed in the housing **182.** The switch **188** includes a spring-loaded remote control pin **188A** that projects forwardly from the front side of the rear section **183A.** The switch **188** further includes switch electronics **188B** mounted on a PCB **188E** and connected to the control pin **188A** and an output electrical connector **188D.**

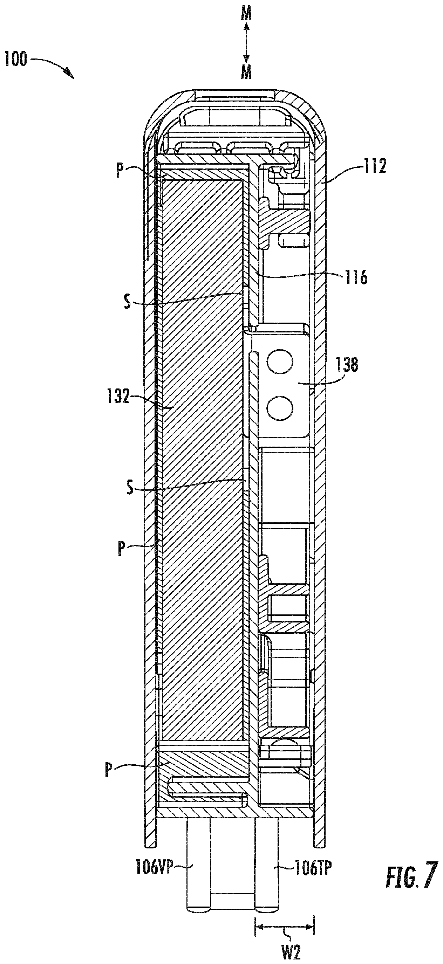

The SPD module **100** includes a housing **110** and an overvoltage clamping element assembly **130,** an integral thermal disconnector mechanism **140,** an integral indicator mechanism **170** (including a local alarm mechanism **170A,** and a remote alarm mechanism **170B**), a first fail-safe mechanism **102,** and a second fail-safe mechanism **104** disposed in the housing **110,** as discussed in more detail below. The SPD module **100** further includes a voltage designator pin member or insert **106V,** a type designator pin member or insert **106T,** potting **P** (shown only in **FIG. 7**), silicone **S**, a first electrical contact member **166,** and a second electrical contact member **168.**

The housing **110** includes an inner housing member or frame **114** and an outer housing member or cover **112** collectively forming the housing **110** (**FIGS. 1-13**). The housing **110** defines an internal chamber or cavity.

A front indicator opening or window **112B** is provided on a front wall of the cover **112.** The indicator window **112B** may serve to visually indicate a change in status of the module **100**, as discussed below.

The frame **114** includes a partition wall **116A** separating opposed cavities **118A** and **118B**. An electrode slot **120** is defined in the partition **wall 116A** and connects the cavities **118A**, **118B**. The frame **114** includes a front wall **116B** and a rear wall **116C.** A switch opening **122** is defined in the rear wall **116C.** The pin inserts **106V** and **106T** are secured in *(e.g.,* press-fit into) sockets **105V** and **105T,** respectively, in the rear **wall 116C.**

An integral reinforcement structure **124,** an integral spring anchor post **126A,** an integral pivot post **126B**, and a spring brace post **126C** each project laterally into the cavity **118B** from the partition wall **116A.** The reinforcement structure **124** has a substantially planar platform or engagement surface **124A.**

The housing members **112, 114** may be formed of any suitable material or materials. In some embodiments, each of the housing members **112, 114** is formed of a rigid polymeric material. Suitable polymeric materials may include polyamide (PA), polypropylene (PP), polyphenylene sulfide (PPS), or ABS, for example.

In some embodiments and as shown, the overvoltage clamping element assembly **130** is a varistor assembly including a varistor **132**, a first electrode **134** and a second electrode **136.** The varistor **132** has opposed contact surfaces **132A**, **132B**. Metallization layers **133** cover the contact surfaces **132A**, **132B**. The first electrode **134** is bonded to the metallization layer **133** of the contact surface **132A** by solder and the second electrode **136** is bonded to the metallization layer **133** of the contact surface **132B** by solder so that the electrodes **134** and **136** are electrically connected to the contact surfaces **132A** and **132B**, respectively.

The first electrode **134** includes a perimeter portion **134A,** a cross or brace leg **134B**, and a termination tab **134C.** The first electrode **134** is electrically conductive. In some embodiments, the first electrode **134** is formed of metal. Suitable metals may include nickel brass or copper alloys such as CuSn 6 or Cu - ETP. In some embodiments, the first electrode **134** is unitary (composite or monolithic) and, in some embodiments, the first electrode **134** is monolithic.

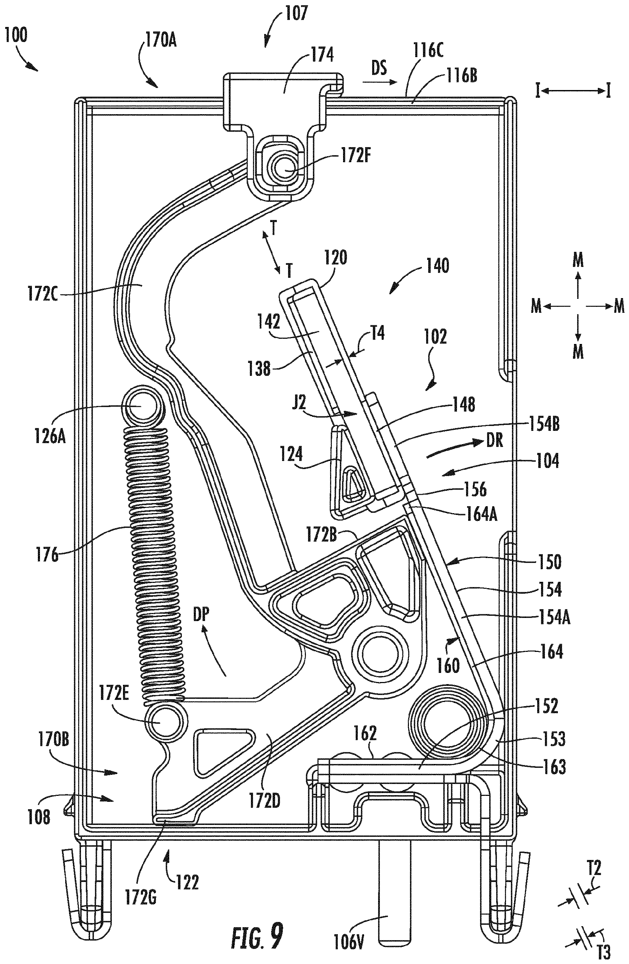

The second electrode **136** includes a perimeter portion **136A,** a cross or brace leg **136B,** and a termination tab **138.** The termination tab **138** has a substantially planar contact surface **138A** defining a tab plane **T-T** (**FIG. 9**). In some embodiments, the tab plane **T-T** is substantially orthogonal to the plane **M-M (****FIGS. 7** and **9**) defined by the contact surface **132B.**

The second electrode **136** is electrically conductive. In some embodiments, the second electrode **136** is formed of metal. Suitable metals may include nickel brass or copper alloys such as CuSn 6 or Cu - ETP In some embodiments, the second electrode **136** is unitary (composite or monolithic) and, in some embodiments, the second electrode **136** is monolithic.

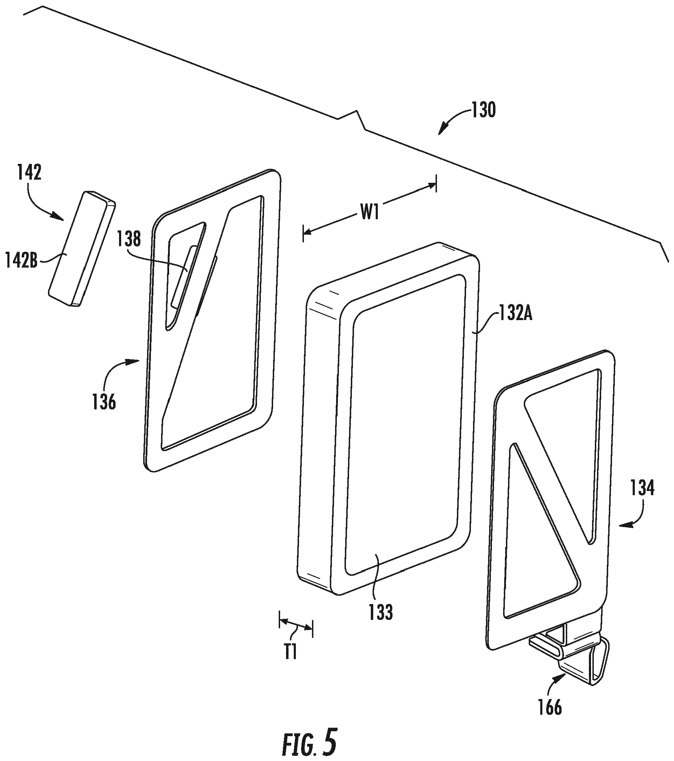

The thickness and the diameter of the varistor **132** will depend on the varistor characteristics desired for the particular application. In some embodiments, the varistor **132** has a width **W1 (****FIG. 5**) to thickness **T1** ratio of at least 2. In some embodiments, the thickness **T1** of the varistor **132** is in the range of from about 0.75 to 15 mm.

The varistor material of the varistor **132** may be any suitable material conventionally used for varistors, namely, a material exhibiting a nonlinear resistance characteristic with applied voltage. In some embodiments, the varistor **132** is a metal oxide varistor (MOV). Preferably, the resistance becomes very low when a prescribed voltage is exceeded. The varistor material may be a doped metal oxide or silicon carbide, for example. Suitable metal oxides include zinc oxide compounds.

The varistor assembly 130 is contained in the cavity **118A** such that the terminal tab **138** extends through the slot **120** and into the cavity **118B.** The silicone S surrounds the slot **120.** The remainder of the space in the cavity **118A** is filled with the potting **P.** The silicone **S** prevents the potting from entering the region about the slot **120** so that the potting does not intrude into the cavity **118B** where it might interfere with the engagements and mechanisms present in the cavity **118B.**

The thermal disconnector mechanism **140** includes a heat sink member **142,** a disconnect spring **150,** a supplemental spring **160,** and a layer of solder **148.**

The heat sink member **142** has opposed inner and outer faces **142A** and **142B.** The heat sink member **142** is affixed to the face **138A** of the tab **138** to provide good electrical conductivity and thermal conductivity between the tab **138** and the inner face **142A** of the heat sink member **142.** The heat sink member **142** may be secured to the tab **138** by any suitable technique. In some embodiments and as shown, the heat sink member **142** is secured to the tab **138** by a plurality of rivets **144.** Holes **138A** are provided in the tab **138** to receive and secure the rivets **144.** In some embodiments, the heat sink member **142** is secured to the tab **138** by a plurality of TOX or clinch rivets. In some embodiments, the heat sink member **142** is secured to the tab **138** by a weld.

As used herein, the term "thermal capacity" means the product of the specific heat of the material or materials of the object multiplied by the mass or masses of the material or materials of the object. That is, the thermal capacity is the quantity of energy required to raise one gram of the material or materials of the object by one degree centigrade times the mass or masses of the material or materials in the object.

According to some embodiments, the thermal capacity of the heat sink member **142** is in the range of from about 0.2 to 2.0 Joules/Kelvin (J/K).

According to some embodiments, the thermal capacity of the heat sink member **142** is substantially greater than the thermal capacity of the second electrode **136.** According to some embodiments, the thermal capacity of the heat sink member **142** is substantially lower than the thermal capacity of the second electrode **136.** According to some embodiments, the thermal capacity of the heat sink member **142** is at least 0.15 times the thermal capacity of the second electrode **136** and, in some embodiments, is in the range of from about 0.15 to 2.5 times the thermal capacity of the second electrode **136.**

According to some embodiments, the thermal capacity of the heat sink member **142** is substantially greater than the thermal capacity of the electrode tab **138.** According to some embodiments, the thermal capacity of the heat sink member **142** is at least 3 times the thermal capacity of the electrode tab **138** and, in some embodiments, is in the range of from about 3 to 10 times the thermal capacity of the electrode tab **138.**

According to some embodiments, the thermal capacity of the heat sink member **142** is substantially greater than the thermal capacity of the contact portion **154B** (discussed below) of the disconnect spring **150.** According to some embodiments, the thermal capacity of the heat sink member **142** is at least 3 times the thermal capacity of the contact portion **154B** and, in some embodiments, is in the range of from about 3 to 10 times the thermal capacity of the contact portion **154B.**

According to some embodiments, the thermal capacity of the heat sink member **142** is substantially greater than the combined thermal capacities of the electrode tab **138** and the contact portion **154B.** According to some embodiments, the thermal capacity of the heat sink member **142** is at least 3 times the combined thermal capacities of the electrode tab **138** and the contact portion **154B** and, in some embodiments, is in the range of from about 3 to 8 times the combined thermal capacities of the electrode tab **138** and the contact portion **154B.**

According to some embodiments, the heat sink member **142** has a mass in the range of from about 0.5 to 2.5 g. According to some embodiments, the mass of the heat sink member **142** is in the range of from about 0.2 to 10 times the mass of the electrode tab **138** and, in some embodiments, in the range of from about 5 to 10 times the mass of the electrode tab **138.**

According to some embodiments, the heat sink member **142** is formed of metal. In some embodiments, the heat sink member **142** is formed of a metal selected from the group consisting of copper, brass or other suitable copper alloys or other metal or alloys with suitable thermal capacity and thermal conductivity.

According to some embodiments, the specific heat capacity of the material forming the heat sink member **142** is in the range of from about 100 to 1200 J/kg-K.

The heat sink member **142** may be formed by any suitable technique. In some embodiments, the heat sink member **142** is monolithic.

In some embodiments, the heat sink member **142** is formed of a material having a thermal conductivity of at least about 200 W/mK.

In some embodiments, the heat sink member **142** is formed of a material having an electrical conductivity of at least about 2.5 x 10⁷ S/m.

The disconnect spring **150** includes a base leg **152** and a cantilevered free leg **154** joined to the base leg **152** by a radiused bend **153.** The free leg **154** includes a lower portion **154A** proximate the bend **153** and an upper contact portion **154B** distal from the bend **153.** The contact portion **154B** includes an inner contact face facing the heat sink member 142. A weak region **156** is located in the spring **150** between the lower portion **154A** and the contact portion **154B.** The weak region **156** includes a notch **156A** defined in the side edge of the spring **150.** As a result, the spring 150 has a reduced cross-sectional area at the weak region **156.**

According to some embodiments, the spring **150** has a thickness **T2 (****FIG. 9****)** in the range of from about 0.2 mm to 1 mm. According to some embodiments, the thickness **T2** of the spring **150** is substantially uniform from end to end.

According to some embodiments, the spring **150** has a width **W2** (**FIG. 7**) in the range of from about 3 mm to 10 mm. According to some embodiments, the width **W2** of the spring **150** is substantially uniform from end to end.

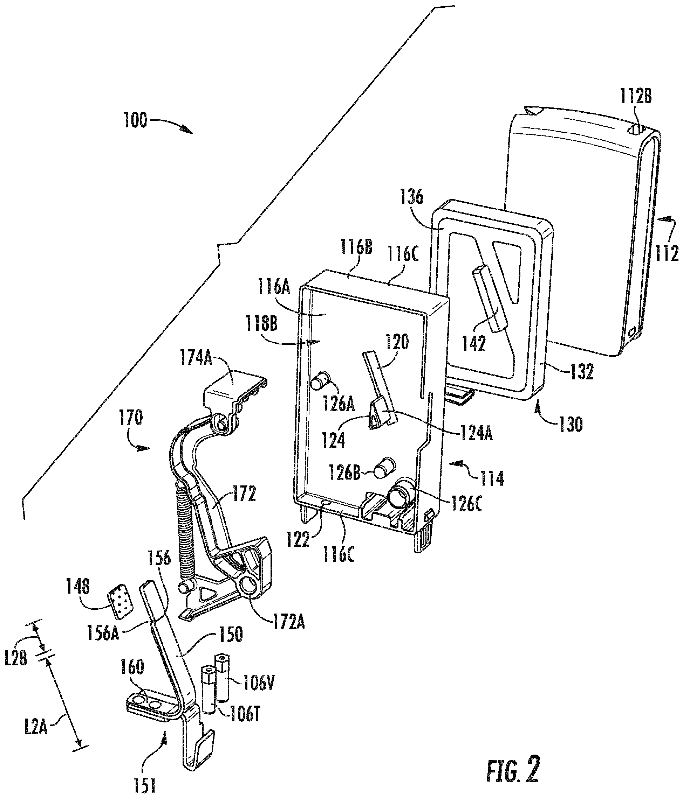

According to some embodiments, the length **L2A (****FIG. 2****)** of the lower portion **154A** is in the range of from about 15 mm to 35 mm.

According to some embodiments, the length **L2B (****FIG. 2****)** of the contact portion **154B** is in the range of from about 2 mm to 15 mm.

The spring **150** may be formed of any suitable material or materials. In some embodiments, the spring **150** is formed of metal. Suitable metal materials may include CuSn 0.15 alloy (bronze), nickel brass, CuSn6, Cu -ETP, oxygen free copper, for example. According to some embodiments, the spring **150** has a restoring force in the ready position (**FIG. 9**) in the range of from about 5 N to 30 N. According to some embodiments, the spring is formed of a material (e.g., a metal) having a softening temperature greater than 300°C. In some embodiments, the spring **150** is unitary (composite or monolithic) and, in some embodiments, the spring **150** is monolithic. In some embodiments, the spring **150** is formed (*e*.*g*., cut and bent) from sheet metal.

According to some embodiments, the spring **150** has an electrical conductivity of at least 14 nΩ·m (at 20 °C).

The supplemental spring **160** includes a base leg **162** and a cantilevered free leg **164** joined to the base leg **162** by a radiused bend **163.** The free leg **164** extends from the bend **163** to a distal terminal end **164A.** The terminal end **164A** is located proximate the weak region **156.** The free leg **164** may be substantially coextensive with the lower leg **154A.**

According to some embodiments, the spring **160** has a thickness **T3 (****FIG. 9****)** in the range of from about 0.2 mm to 0.9 mm. According to some embodiments, the thickness **T3** of the spring **160** is substantially uniform from end to end.

According to some embodiments, the spring **160** has a width in the range of from about 3 mm to 10 mm. According to some embodiments, the width of the spring **160** is substantially uniform from end to end.

According to some embodiments, the length of the free leg **164** is in the range of from about 5 mm to 15 mm.

The spring **160** may be formed of any suitable material or materials. In some embodiments, the spring **160** is formed of metal. Suitable metal materials may include CuSn 0.15 alloy (bronze), CuSn6, Cu -ETP, oxygen free copper , for example. According to some embodiments, the spring **160** has a restoring force in the ready position **(****FIG. 9****)** in the range of from about 0.5 N to 5 N. In some embodiments, the spring **160** is formed of a material (*e*.*g*., a metal) having a softening temperature greater than 300°C. In some embodiments, the spring **160** is unitary and, in some embodiments, the spring **160** is monolithic. In some embodiments, the spring **160** is formed (e.g., cut and bent) from sheet metal. In some embodiments, the spring **160** is formed of a different material than the spring **150.**

According to some embodiments, the spring **160** has an electrical conductivity of at least 14 nΩ·m (at 20 °C).

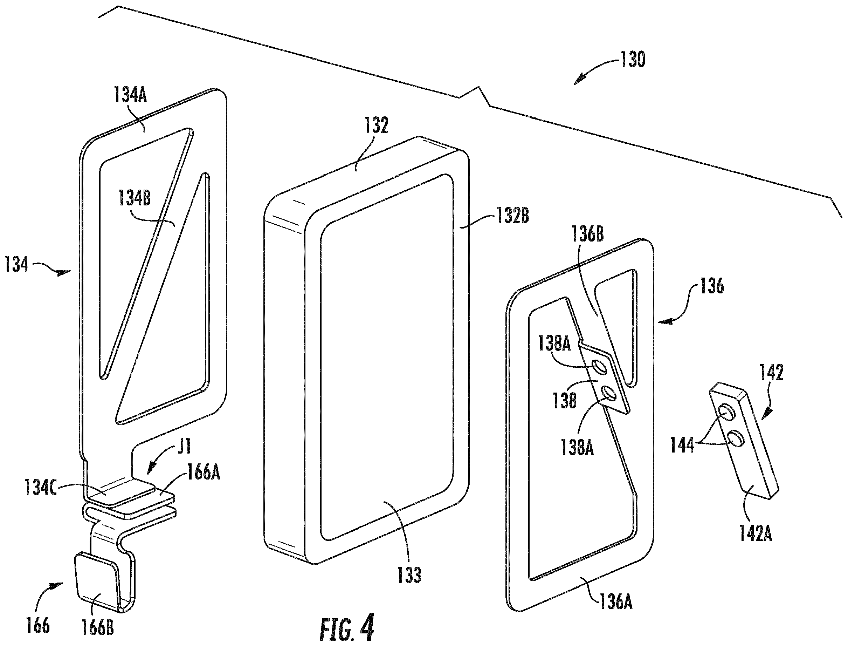

The first electrical contact member **166 (****FIG. 4****)** includes a base **166A** and an integral U-shaped terminal connector **166B.** The base **166A** is secured to the contact tab **134C** of the first electrode **134** by solder or welding, for example, at a joint **J1.**

The relative positions of the parts **134C** and **166A** can be adjusted or varied when forming the joint **J1** during manufacture. For example, the lateral position of the contact member **166** relative to the first electrode member **134** can be adjusted and then secured *(e.g.,* by solder or welding) to accommodate varistors **132** of different thicknesses. This floating contact or joint can allow varistors **132** of different thicknesses of to be assembled using the same electrode **134.**

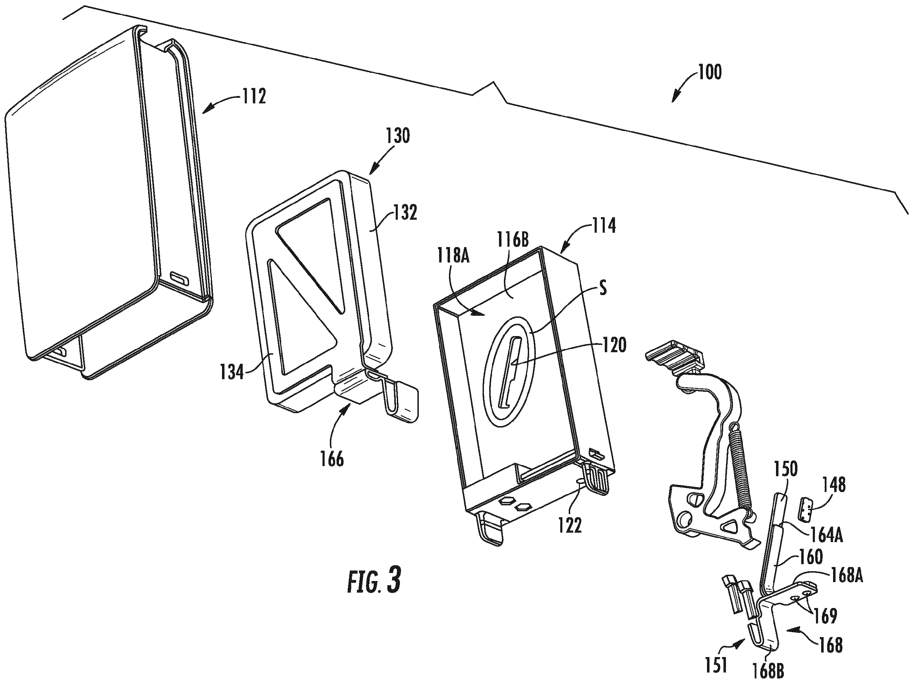

The second electrical contact member **168 (****FIG. 3****)** includes a base **168A** and an integral U-shaped terminal connector **168B.** The springs **150** and **160** are secured to the base **168A** by rivets **169.** The springs **150, 160** and the base **168A** thus assembled collectively form a spring/contact subassembly **151.**

The contact members **166, 168** may be formed of any suitable material or materials. In some embodiments, the contact members **166, 168** are formed of metal. Suitable metal materials may include nickel brass, CuSn 0.15, CuSN 6, CuP 0.008, for example. In some embodiments, each contact members **166, 168** is unitary and, in some embodiments, is monolithic.

The solder **148** may be formed of any suitable material or materials. In some embodiments, the solder **148** is formed of metal. Suitable metal materials may include 58Bi42Sn for example.

According to some embodiments, the solder **148** is selected such that its melting point is greater than a prescribed maximum standard operating temperature, but less than or equal to a prescribed disconnect temperature. The maximum standard operating temperature may be the greatest temperature expected in the solder **148** during normal operation (including handling overvoltage surges within the designed for range of the module **100**). The prescribed disconnect temperature is the temperature of the solder **148** at with the solder **148** is intended to release the spring **150** in order to actuate the first fail-safe mechanism **102.**

According to some embodiments, the solder **148** has a melting point in the range of from about 109°C to 160 °C and, in some embodiments, in the range of from about 85°C to 200°C.

According to some embodiments, the solder **148** has an electrical conductivity in the range of from about 100 Siemens/meter (S/m) to 200 S/m and, according to some embodiments, in the range of from about 50 S/m to 500 S/m.

According to some embodiments, the layer of solder **148** has a thickness **T4 (****FIG. 9****)** in the range of from about 0.05 mm to 0.5 mm. According to some embodiments, the thickness **T4** is substantially uniform from end to end.

According to some embodiments, the layer of solder **148** has area in the range of from about 25 mm² to 45 mm². According to some embodiments, the layer of solder **148** covers at least about 85 percent of the overlap area between the heat sink member **142** and the contact portion **154B**.

The indicator mechanism **170** includes a swingarm **172,** an indicator shuttle or member **174,** and an indicator spring **176.** The swingarm **172** includes a pivot bore **172A** from which a trigger leg **172B**, an indicator leg **172C,** and a switch leg **172D** radially extend. An integral spring anchor post **172E** is provided on the switch leg **172D.**

A post **172F** on the indicator leg **172C** couples the indicator member **174** to the leg **172C.** The indicator member **174** includes an indicator surface **174A.** The indicator member **174** is slidably secured to the rail or frame front wall **116B** to slide along an indicator axis **I-I (****FIG. 9****)**.

The indicator spring **176** is secured at either end to the anchor post **172E** and the anchor post **126A,** and is elastically stretched so that it exerts a persistent pull force on the switch leg **172D.**

The swingarm **172** and the indicator member **174** may be formed of any suitable material or materials. In some embodiments, the components **172, 174** are formed of a rigid polymeric material. Suitable polymeric materials may include polyamide (PA), polypropylene (PP), polyphenylene sulfide (PPS), or ABS, for example.

When the module **100** is assembled in the ready configuration as shown in **FIGS. 7-9**), the disconnect spring **150** is elastically bent, deformed or deflected so that it persistently exerts a biasing load on the solder **148** pulling away from the heat sink member **142** in a release direction **DR.** The supplemental spring **160** is likewise elastically bent, deformed or deflected so that it persistently exerts a biasing load against the disconnect spring **150** in the release direction DR.

In the ready configuration, the swingarm **172** is locked in the position shown in **FIG. 9** by the disconnect spring **150.** The indicator spring **176** is elastically extended or stretched so that it persistently exerts a biasing load pulling the leg **172D** in a pivot direction **DP** *(i.e.,* toward the front wall **116B**). The indicator member **174** is thereby secured in the ready position wherein the indicator surface **174A** is not aligned with and visible through the window **112B.**

The system **101** may be used as follows in accordance with methods of the present invention.

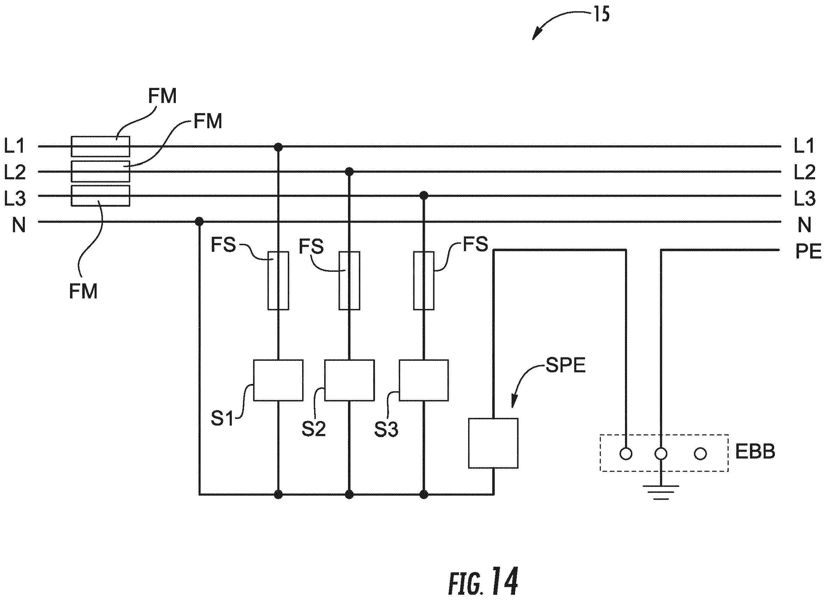

With reference to **FIG. 14****,** an exemplary electrical circuit **15** in which one or more SPD assemblies **101** may be used is shown therein. The SPD assemblies **101** may be mounted on a DIN rail **10 (****FIG. 1****).** The illustrated circuit **15** is a three phase system using a "3+1" protection configuration. In the illustrated circuit **15,** there are three SPD assemblies **101** (designated **S1**, **S2**, **S3**, respectively) each connected between a respective line **L1**, **L2**, **L3** and N *(i.e.,* L-N). An additional SPD module **SPE** is connected between **N** and **PE** (*i*.*e*., N-PE). The SPD module **SPE** may be connected to **PE** through a local ground terminal **EBB** (*e*.*g*., an equipotential bonding busbar). The SPD module **SPE** may also be an SPD assembly **101** as described herein. Each line **L1**, **L2**, **L3** may be provided with a main circuit breaker or fuse **FM** and an external disconnector such as a supplemental fuse **FS** between the line and its SPD assembly **S1**, **S2**, **S3**. In other embodiments, one or more of the SPD assemblies **S1**, **S2**, **S3**, **SPE** may be of a different construction than the SPD assembly **101** as disclosed herein.

Operation of the SPD assembly **S1** and conditions or transient overvoltage events on the line **L1** will be described hereinbelow. However, it will be appreciated that this description likewise applies to the SPD assemblies **S2, S3** and the lines **L2**, **L3**.

In case of a failure of the varistor **132,** a fault current will be conducted between the corresponding line (*e*.*g*., Line **L1** of **FIG. 14**) and the neutral line N. As is well known, a varistor has an innate nominal clamping voltage VNOM (sometimes referred to as the "breakdown voltage" or simply the "varistor voltage") at which the varistor begins to conduct current. Below the VNOM, the varistor will conduct practically no current. Above the VNOM, the varistor will conduct a current *(i.e.,* a leakage current or a surge current). The VNOM of a varistor is typically specified as the measured voltage across the varistor with a DC current of 1mA.

As is well known, a varistor has three modes of operation. In a first normal mode (discussed above), up to a nominal voltage, the varistor is practically an electrical insulator. In a second normal mode (also discussed above), when the varistor is subjected to an overvoltage, the varistor temporarily and reversibly becomes an electrical conductor during the overvoltage condition and returns to the first mode thereafter. In a third mode (the so-called end of life mode), the varistor is effectively depleted and becomes a permanent, non-reversible electrical conductor.

The varistor also has an innate clamping voltage VC (sometimes referred to as simply the "clamping voltage"). The clamping voltage VC is defined as the maximum voltage measured across the varistor when a specified current is applied to the varistor over time according to a standard protocol.

In the absence of an overvoltage condition, the varistor **132** provides high resistance such that approximately no current flows through the module **100** as it appears electrically as an open circuit. That is, ordinarily the varistor passes approximately no current. In the event of an overcurrent surge event (typically transient; *e*.*g*., lightning strike) or an overvoltage condition or event (typically longer in duration than an overcurrent surge event) exceeding VNOM, the resistance of the varistor wafer decreases rapidly, allowing current to flow through the module **100** and create a shunt path for current flow to protect other components of an associated electrical system. Normally, the varistor recovers from these events without significant overheating of the module **100.**

Varistors have multiple failure modes. The failure modes include: 1) the varistor fails as a short circuit; and 2) the varistor fails as a linear resistance. The failure of the varistor to a short circuit or to a linear resistance may be caused by the conduction of a single or multiple surge currents of sufficient magnitude and duration or by a single or multiple continuous overvoltage events that will drive a sufficient current through the varistor.

A short circuit failure typically manifests as a localized pinhole or puncture site (herein, "the failure site") extending through the thickness of the varistor. This failure site creates a path for current flow between the two electrodes of a low resistance, but high enough to generate ohmic losses and cause overheating of the device even at low fault currents. Sufficiently large fault current through the varistor can melt the varistor in the region of the failure site and generate an electric arc.

A varistor failure as a linear resistance will cause the conduction of a limited current through the varistor that will result in a buildup of heat. This heat buildup may result in catastrophic thermal runaway and the device temperature may exceed a prescribed maximum temperature. For example, the maximum allowable temperature for the exterior surfaces of the device may be set by code or standard to prevent combustion of adjacent components. If the leakage current is not interrupted at a certain period of time, the overheating will result eventually in the failure of the varistor to a short circuit as defined above.

In some cases, the current through the failed varistor could also be limited by the power system itself (*e*.*g*., ground resistance in the system or in photo-voltaic (PV) power source applications where the fault current depends on the power generation capability of the system at the time of the failure) resulting in a progressive build up of temperature, even if the varistor failure is a short circuit. There are cases where there is a limited leakage current flow through the varistor due to extended in time overvoltage conditions due to power system failures, for example. These conditions may lead to temperature build up in the device, such as when the varistor has failed as a linear resistance and could possibly lead to the failure of the varistor either as a linear resistance or as a short circuit as described above.

As discussed above, in some cases the module **100** may assume an "end of life" mode in which a varistor **132** is depleted in full or in part *(i.e.,* in an "end of life" state), leading to an end of life failure. When the varistor reaches its end of life, the module **100** will become substantially a short circuit with a very low but non-zero ohmic resistance. As a result, in an end of life condition, a fault current will continuously flow through the varistor even in the absence of an overvoltage condition.

In use, the base **200** is mounted on the DIN rail **10** as shown in **FIG. 1****.** The DIN rail **10** is received in the channel **182F** and secured by the hooks **182H** and the latch mechanism **182G.**

Cables **20, 22** (shown in dashed line in **FIG. 1**) are inserted through the cable ports **182C** and secured in the clamp connectors **185A.** In some embodiments, the cable **20** is connected to the line **L1** and the cable **22** is connected to Protective Earth (PE)

The module **100** is then axially plugged or inserted into the receiver slot **183D** in an insertion direction along the axis **A-A** through the front opening. The module **100** is pushed back into the receiver slot **183D** until the rear end of the module **100** substantially engages the front side of the rear housing section **183A,** as shown in **FIG. 1****.**

Insertion of the module **100** into the slot **183D** causes the terminals **166B** and **168B** to be inserted into the sockets **184B** and **186B** along an insertion axis **I-I**. Insertion of the module **100** into the slot **183D** also causes the pins **106VP** and **106TP** to be inserted into the sockets **109VS** and **109TS,** respectively, as discussed in more detail below.

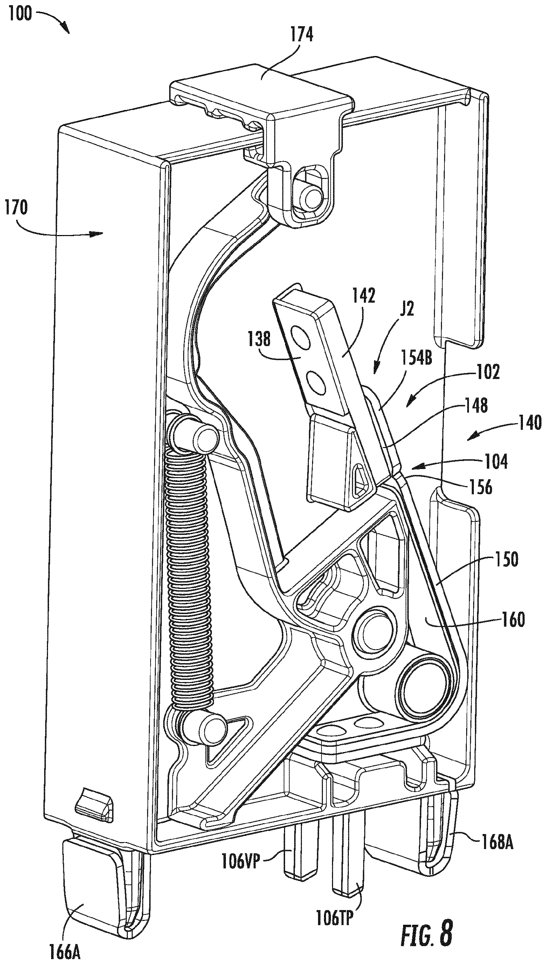

Because the thermal disconnector mechanism **140** is in its ready position, the indicator member **174** is held in a retracted position (**FIGS. 8** and **9**). Additionally, when the module **100** is inserted into the receiver slot **183D,** the remote control pin **188A** is thereby inserted into and extends through the port **122** but is depressed by the end **172G** of the leg **172D** that covers the port **122.** The module **100** thereby provides feedback through the depressed remote control pin **188A** that the module **100** has been seated in the base **200** and the module **100** is in its ready or operational (non-failed) condition.

The module **100** can be released and removed from the base **200** by executing a reverse of the foregoing procedure. The foregoing steps of mounting and removing the module **100** or other suitably configured modules in and from base **200** can be repeated multiple times. For example, in the event that the varistor **132** of the module **100** is degraded or destroyed or no longer of proper specification for the intended application, the module **100** can be replaced with a fresh or suitably constructed module.

The SPD assembly **101** has several modes of operation depending on the state of the varistor **132** and external event conditions.

In some modes, the first fail-safe mechanism **102** operates by heating the solder **148** until the solder melts and permits the elastic spring loads of the springs **150, 160** to cause the contact portion **154B** to pull away from the heat sink member **142** and thereby out of electrical continuity with the electrode **136.** The varistor **132** is thereby electrically disconnected from the contact member **168,** creating an open circuit between the terminals **166B, 168B.**

In some modes, the second fail-safe mechanism **104** operates by heating the spring **150** at the weak region **156** until the weak region is sufficiently heat-softened to permit the loads of the springs **150, 160** to cause the spring **150** to break at the weak region **156.** The contact portion **154B** may remain bonded to the heat sink member **142** by the solder **148,** but the lower portion **154A** pulls away from contact portion **154B** and thereby out of electrical continuity with the electrode **136.** The varistor **132** is thereby electrically disconnected from the contact member **168,** creating an open circuit between the terminals **166B, 168B.**

During normal operation (referred to herein as Mode 1), the module **100** operates as an open circuit between the neutral cable **20** and the PE cable **22.** The thermal disconnector mechanism **140** remains in a ready position **(****FIGS. 8** and **9**), with the contact portion **154B** of the disconnect spring **150** bonded to and in electrical continuity with the heat sink member **142** by the solder **148.** In this normal mode, the varistor **132** is an insulator up to the nominal clamping voltage VNOM (and therefore the SPD module **100** is an insulator as well). In this mode, the fail-safe mechanisms **102, 104** are not actuated (*i*.*e*., the thermal disconnector **140** remains in the ready position **(****FIGS. 8** and **9**)).

In the event of a transient overvoltage or surge current in, the line **L1**, protection of power system load devices may necessitate providing a current path to ground for the excess current of the surge current. The surge current may generate a transient overvoltage between the line cable **20** and the PE cable **22,** which may overcome the isolation of the varistor **132.** In this event and mode (referred to herein as Mode 2), the varistor **132** is subjected to an overvoltage exceeding VNOM, and temporarily and reversibly becomes a low resistance electrical conductor. The varistor **132** will then divert, shunt or allow the high surge current or impulse current to flow from the line cable **20,** through the contact member **166,** through the connector **184,** through the electrode **134,** through the varistor **132,** through the electrode **136,** through the heat sink member **142,** through the solder **148,** through the springs **150, 160,** through the contact member **168,** through the connector **186** and to the protective earth cable **22** for a short duration.

In Mode 2, the fail-safe mechanism **102** does not operate because the overvoltage event is short in duration and the heat generated by the surge current is insufficient to melt the solder **148.** The heat that is generated by the varistor **132** *(e.g.,* from ohmic losses) is transferred to and absorbed or buffered in the heat sink element **142** and dissipated without raising the temperature of the solder **148** high enough to melt the solder **148** to the point where the bond between the spring **150** and the heat sink member **142** is broken. The heat sink member **142** may attenuate the heat transfer from the varistor **132** to the solder **148** so that the temperature of the solder **148** does not exceed the melting point of the solder **148.** The heat sink member **142** may buffer the heat from the varistor **132.** As used herein, buffering the heat means that the heat sink member **142** temporarily stores the heat. This allows the heat to be dissipated to the environment rather than to the solder **148.** Further, the heat sink member **142** extends, lengthens or elongates the heat transfer path from the electrode **134** to the solder **148,** thereby extending the time required to trip the spring **150** and enlarging the surface area for heat dissipation.

In Mode 2, the fail-safe mechanism **104** does not operate because the heat generated in the spring **150** is not sufficient to weaken the weak region **156** to the point of breaking.

If the surge or impulse current is below the maximum surge/impulse current that the SPD module **100** is rated for, the external fuse **FS** will not blow and the varistor **132** should remain functional. In this case, because the fail-safe mechanisms **102, 104** are not tripped, the SPD module **100** can remain in place for future overvoltage events.

If the surge or impulse current exceeds the maximum surge/impulse current that the SPD module **100** is rated for, the fuse **FS** will typically blow or be tripped. The varistor **132** may also fail internally as a short (with pinhole) or with limited resistance. In such cases, the mode of operations will be a failure mode as described below for Modes 3, 4 or 5.

In a third mode (Mode 3), the varistor **132** is in end of life mode with a low leakage current between the lines **L1** and **PE**. The varistor **132** fails as a linear resistance. This type of varistor failure could be the result of multiple surge/impulse currents. The leakage current generates heat in the varistor **132** from ohmic losses. In some cases, the leakage current occurs during normal operation and is low (from about 0 to 0.5A). The heat generated in the varistor **132** progressively deteriorates the varistor **132** and builds up over an extended duration.

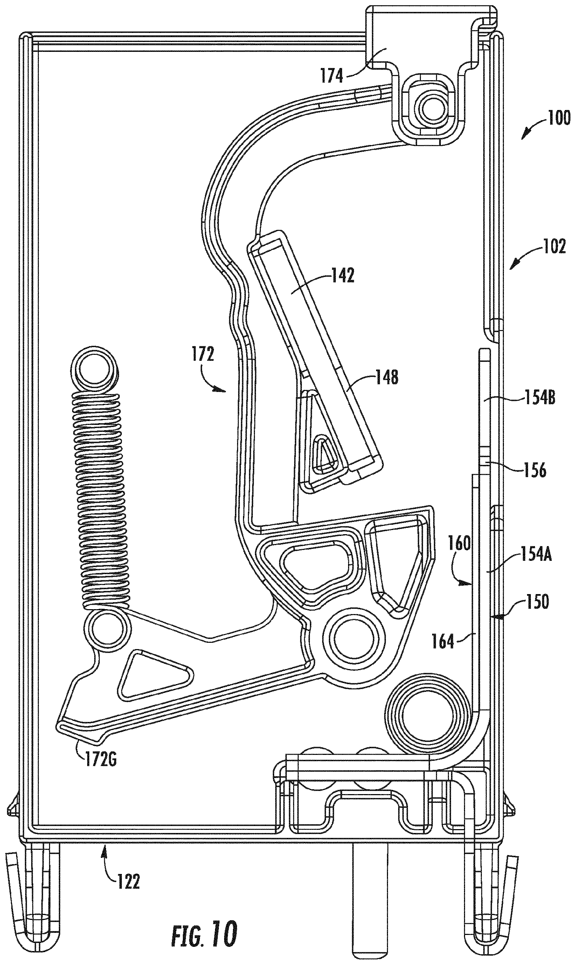

In Mode 3, the fail-safe mechanism **102** operates. More particularly, the heat (e.g., from ohmic losses in the varistor **132**) is transferred from the varistor **132** to the electrode **136,** to the heat sink element **142,** and then to the solder **148.** Over an extended time period (*e*.*g*., in the range of from about 60 seconds to 48 hours), the heat builds up in the heat sink element **142** and the solder **148** until the solder **148** melts. The melted solder **148** releases the spring **150** into an open or released configuration to open the circuit in the SPD module **100** as shown in **FIG. 10****.** The varistor **132** is thereby prevented from catastrophically overheating.

In Mode 3, the fail-safe mechanism **104** does not operate because the heat generated in the spring **150** is not sufficient to weaken the weak region **156** to the point of breaking.

In Mode 3, the SPD module **100** must be replaced because the fail-safe mechanism **102** has been tripped.

In a fourth mode (Mode 4), the varistor **132** is in good condition (*i*.*e*., not in end of life condition), but there is a Temporary Overvoltage (TOV) event wherein the voltage across the terminals **166B, 168B** forces the varistor **132** to conduct an increased leakage current (typically, in the range of from about 0 to 10A). This leakage current builds up heat over a duration (e.g., in the range of from about 5 seconds to 120 minutes) that is shorter than the duration of the leakage current that triggers the fail-safe mechanism **102** in Mode 3, but far longer than the impulse current that is conducted by the varistor **132** in Mode 2.

In Mode 4, the fail-safe mechanism **102** is tripped *(i.e.,* the spring **150** is released by the solder **148**) to open the circuit through the SPD module **100** as shown in **FIG. 10** in the same manner as described for Mode 3.

In Mode 4, the fail-safe mechanism **104** does not operate because the heat generated in the spring **150** is not sufficient to weaken the weak region **156** to the point of breaking.

In Mode 4, the SPD module **100** must be replaced because the fail-safe mechanism **102** has been tripped.

In a fifth mode (Mode 5), the varistor **132** is in end of life mode as a short circuit or a linear resistance that allows current from the power source to be conducted therethrough. The value of the conducted current could be between about 10 Amps and the maximum short circuit current of the power source (which should be lower than the short circuit current rating of the SPD module **100**). This depends on the specific configuration of the electrical installation and the severity of the varistor failure.

For Mode 5, there are two mechanisms operating to protect the SPD module **100:** namely, the external fuse **FS** and the fail-safe mechanism **104** as described above. The fail-safe mechanism **104** is triggered for current levels between 10 Amps and intermediate current levels (typically five times the rating of the external fuse **FS**). For higher current levels, the external fuse **FS** will trip first to protect the SPD **100.** For example, an SPD **100** could be protected by the fail-safe mechanism **104** for current levels up to 1000A and with a 200A external fuse **FS** for current levels up to 25kA.

In Mode 5, for intermediate currents, the current level is not high enough to trip the external fuse **FS** within a reasonable amount of time (*e*.*g*., in the range of from about 50ms to 5000ms). Further, the fail-safe mechanism **102** is too slow and cannot protect the SPD module **100.** By the time the fail-safe mechanism **102** trips, there would be significant internal damage to the SPD module **100.**

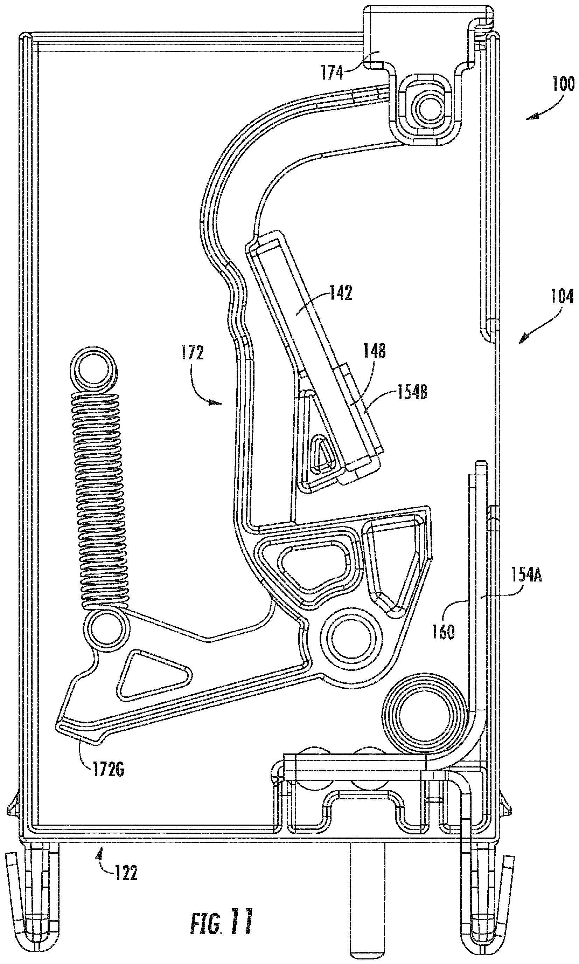

Therefore, in Mode 5, the fail-safe mechanism **104** is tripped to open the circuit through the SPD module **100** as shown in **FIG. 11****.** More particularly, the current heats the spring **150** at the weak region **156** until the loads of the springs **150, 160** cause the spring **150** to break at the weak region **156** and produce the necessary distance between the electrodes for extinguishing the associated arc. The spring **150** will disproportionately head and weaken at the weak region **156** because the electrically conductive cross-sectional area at the weak region **156** is less than that of the remainder of the spring **150,** because the electrically conductive cross-sectional area of the remainder of the spring **150** is effectively supplemented by the heat sink member **142** and the supplemental spring **160,** and because the other remainder of the spring **156** is cooled by the supplemental spring **160** and the heat sink member **142,** which serve as heat sinks. The varistor **132** is thereby electrically disconnected from the contact member **168,** creating an open circuit between the terminals **166B, 168B.** Only the fail-safe mechanism **104** operates in time and disconnects the SPD **100** before any internal damage tales place.

Alternatively, a lower rated fuse **FS** could be used so that the fuse **FS** will trip much faster and protect the SPD **100** even at intermediate current levels. For example, a 10A fuse **FS** could be used and the fail-safe mechanism **104** could be omitted. But then, such a lower rated fuse **FS** would trip at surge/impulse currents below the level that the SPD **100** could actually withstand. Therefore, by using the fail-safe mechanism **104,** the performance of the SPD **100** is extended in surge/impulse currents.

The release of the disconnect spring **150** as described above (by actuation of the fail-safe mechanism **102** or the fail-safe mechanism **104**) also actuates a local alert mechanism **107.** The displacement of the springs **150, 160** in the release direction **DR** frees the swingarm leg **172B** from the springs **150**, **160**. The swingarm **172** is driven in a pivot direction **DP** (**FIG. 9**) by the spring **176** from the locked position (**FIGS. 7**-**9**) to an indicating position **(****FIGS. 10** and **11**). The indicator member **174** is thereby driven by the spring **176** to slide along the rail **116B** in a signaling direction **DS (****FIG. 9**). The indicator member **174** is thereby displaced to an alert position as shown in **FIG. 10** or **11** wherein the indicator surface **174A** is aligned with and visible through the front window **112B** of the module housing **110.** The indicator surface **174A** has a noticeably different visual appearance through the front window **112B** than the housing indicator surface **116C,** providing a visual alert or indication so that an operator can readily determine that the local alert mechanism **107** has been activated. For example, the housing indicator surface **116C** and the indicator surface **174A** may have distinctly different colors *(e.g.,* green versus red). In this manner, the local alert mechanism **107** can provide a convenient indication that the module **100** has assumed its open circuit configuration or state.

The release of the swingarm **172** as described above also actuates a remote alert mechanism **108.** In the ready position of the module **100,** an end **172G** of the switch leg **172D** covers the rear opening **122** so that the switch pin **188A** of the base **200** is maintained compressed. When the swingarm **172** pivots into the indicating position, the switch leg **172D** moves away from the rear opening **122** so that the rear port **122** is no longer covered. The switch pin **188A** is thereby permitted to extend further into the module **100** through the opening **122** to an alert signal position. The remote pin **188A** is connected to the switch electronics **188B** or sensor, which detects the displacement of the pin **188A** and provides an electrical signal to a remote device or terminal via the connector **188D.** In this manner, the remote alert mechanism **108** can provide a convenient remote indication that the module **100** has assumed its open circuit configuration or state.

As discussed above, the thermal disconnector mechanism **140** is responsive to temperature rise in the SPD module **100** when current flows through the varistor **132,** and disconnects the varistor **132** from the power line. In general, the thermal disconnector mechanism **140** may be configured to desirably balance the response of the SPD assembly **100** and the fuse **FS** to impulse or surge currents versus leakage currents. The failure mode of the varistor **132** could be one of the modes discussed above, for example: progressive deterioration of the varistor **132** that will result in increased leakage current at normal operation (*e*.*g*., 0 - 0.5A); temporary overvoltage (TOV) events that will result in an increased conduction of leakage current (*e*.*g*., 0.5A - 10A); or a short circuit of the varistor **132** that may result in a significant current conduction (a few amps up to the full prospective short circuit current of the power line, *e*.*g*., up to 200kArms).

When the varistor **132** has an increased leakage current conduction (Modes 3 and 4 discussed above), then the varistor **132** will progressively overheat over an extended period of time. Eventually, the thermal disconnector mechanism **140** will then react to the temperature rise of the varistor **132** that is transferred to the soldering joint **J2** through the electrode tab **138** and the heat sink member **142.** How fast the thermal disconnector mechanism **140** will react to this event on a given temperature profile of the varistor **132** depends on the materials of the components of the thermal disconnector mechanism **140,** the melting point of the solder **148** and the mass and shape of the heat sink member **142.** These parameters, including the thermal capacity of the heat sink member **142,** can be selected to tune the response of the thermal disconnector mechanism **140** to different event profiles or types of events.

Further, the reaction time of the thermal disconnector mechanism **140** should not be too fast, because in cases where the varistor **132** conducts surge currents of increased energy, the varistor **132** will overheat and the disconnector mechanism **140** might trip, even though the varistor **132** is intact. Therefore, it is desirable or necessary to fine tune the reaction time of the thermal disconnector mechanism **140.** Therefore, the selection of the material and shape of the elements that constitute the thermal disconnector mechanism **140** are important, and may be critical, for proper operation during all kinds of events/exposures the SPD module **100** might face, as the reaction time depends on this selection.

During sudden failure of the varistor **132** to a short circuit, the current through the varistor **132** could reach from intermediate values (a few kA) up to the maximum short circuit current of the power line. For intermediate values of current, typically the weak point **156** of the thermal disconnector will overheat first, melt and disconnect the current via the second fail-safe mechanism **104.** This is done because the weak point **156** of the thermal disconnector mechanism **140** has a decreased cross section area of higher resistance. Also the selection of the material of the weak region **156** is important for its fast reaction time, as in such events the second fail-safe mechanism **104** of the thermal disconnector mechanism **140** must react very fast. The second fail-safe mechanism **104** is not responsive to surge currents, so there is no low limit for its response time. In addition, if the second fail-safe mechanism **104** does not react fast enough, the SPD module **100** may be damaged due to the high current conducted. Further, during these events there will be no melting of the solder **148,** as the first fail-safe mechanism **102** takes a relatively long time to react (seconds), while the second fail-safe mechanism **104** executes more quickly and the weak point **156** will melt in milliseconds (ms).

When the short circuit current is high enough, then the SPD module **100** is protected by an external fuse FS. In general, the external fuse **FS** will trip when the short circuit current is sufficient to trip when the fuse **FS.** The thermal disconnector mechanism **140** (either the first fail-safe mechanism **102** or the second fail-safe mechanism **104**) will trip when the short circuit current is insufficient to trip the fuse **FS.**

As discussed above, it is desirable for the solder **148** to not melt and not release the spring **150** in response to a Mode 2 or Mode 5 event. In the absence of the heat sink member **142,** it would be necessary to use a solder **148** having a relatively high melting point to prevent the solder **148** from melting and releasing the spring **150** in response to a Mode 2 event. This is because the heat (thermal energy) generated in the varistor **132** would be relatively quickly transferred (conducted) to the solder **148** via the electrode tab **138** with relatively little time and surface area to dissipate the heat, thereby raising the solder **148** above its melting point.

However, because the heat sink member **142** is provided between the varistor **132** and the solder **148,** the heat from the varistor **132** is absorbed and buffered in the heat sink member **132,** which provides thermal capacitance. Because the heat sink member **142** has a substantially greater thermal capacity than the electrode tab **138,** the temperature of the heat sink member **142** is increased substantially less than the electrode tab **138** alone would be in response to the heat transferred from the varistor **132.** A portion of this heat is in turn transferred to the solder **148** and a portion is dissipated *(e.g.,* by radiation and convection) to the ambient air over time. As a result, the electrode **136** is permitted to cool and the temperature of the solder **148** does not exceed the solder melting point as a result of the Mode 2 event. That is, while the heat generation profile of the varistor **132** remains the same, the profile of the heat transfer to the solder **148** and the temperature profile of the solder **148** are attenuated or damped so that the temperature of the solder **148** is maintained below its melting point. The heat sink member **142** thereby serves to regulate the thermal transfer from the varistor **132** to the solder **148.**

On the other hand, it is desirable for the solder **148** to melt and release the spring **150** in response to a Mode 3 or Mode 4 event. Because the heat transfer to the solder **148** is attenuated by the heat sink member **142** as discussed above, a solder **148** can be used that has a lower melting point without risk that the first fail-safe mechanism **102** will be tripped by a Mode 2 event. The use of a lower melting point soldier **148** may be advantageous because it enables the first fail-safe mechanism **102** to actuate at a lower prescribed temperature of the SPD module **100,** and thereby prevent the SPD module **100** from further overheating.

In some embodiments and as shown, the heat sink member **142** is a discrete component, separately formed from and secured to the electrode tab **138.** This construction can provide several advantages.

In some cases, it may be desirable to form the heat sink member **142** of a different material than the electrode tab **138.** For example, it may be desirable to form the heat sink member **142** of a first material that bonds well with the solder **148** and has preferred thermal performance (*e*.*g*., a greater specific heat capacity than the material of the solder **148**), and to form the electrode tab **138** of a second material that is less expensive or otherwise better suited for forming the electrode **136.** By forming the heat sink member **142** and the electrode tab **138** as separate components, the heat sink member **142** and the electrode tab **138** can be formed of different materials from one another and of materials best suited for their respective functions.

Forming the heat sink member **142** as a discrete component can make the module **100** easier and/or less expensive to manufacture. For example, the heat sink member **142** can provide the required thermal mass and capacity while permitting the electrode tab **138** to be unitarily formed *(e.g.,* by stamping and bending a metal sheet) with the remainder of the electrode **136.**

The discrete heat sink member **142** can provide flexibility in design of the SPD module **100.** Heat sink members **142** of different dimensions and materials can be selected depending on the desired performance characteristics of the module **100.** For example, if it is desired to provide a greater time delay for actuation of the first fail-safe mechanism **102** by buffering more heat from the varistor **132** in the heat sink member **142,** a heat sink member **142** having a larger thermal capacity and/or dissipating surface area may be used.

The integral electrode tab reinforcement feature or post **124** mechanically supports or reinforces the electrode tab **138,** the heat sink member **142** and the spring contact portion **154B** to resist deformation or deflection of these components that may jeopardize the solder joint **J2**. Absent the feature **124,** such deformation or deflection may be induced by electrodynamic loads generated on the electrode **136** by surge currents.

The shapes of the electrodes **134, 136** can provide good electrical contact between the electrodes **134, 136** and the metallization layers **133** while minimizing the required material. The electrodes **134, 136** can accommodate and effectively cover and contact MOVs having a range of sizes (*e*.*g.,* 75V to 880V). The diagonal cross-legs **134B**, **136B** can resist deformation or deflection in the electrodes **134**, **136** and the varistor **132** induced by electrodynamic loads generated on the electrode **136** by surge currents. In particular, the cross-leg **136B** can resist rotation or other relative displacement of the electrode tab **138.**

In some embodiments, the heat sink member **142** is secured to the electrode tab **138** by a plurality of attachment points. For example, in the illustrated embodiment, the heat sink member **142** is secured to the electrode tab **138** by two rivets **144.** The multiple points of attachment can resist relative displacement between the heat sink member **142** and the tab **138,** which may otherwise be induced by electrodynamic loads generated on the electrode **136** by surge currents.

The supplemental spring **160** serves as a heat sink element to provide cooling of the disconnect spring **150** when high current flows through the springs **150**, **160.** The spring **160** also increases the short circuit capability of the SPD module **100.** The spring **160** provides additional deflection force on the spring **150** (and, thereby, the weak region **156** and the solder joint **J2**). Because the spring **160** terminates below the weak region **156,** the spring **160** does not increase the effective cross-sectional area of the weak region **156.**

Because the supplemental spring **160** is a discrete component separately formed from the disconnect spring **150,** the springs **150** and **160** can each be formed of materials and dimensions best suited for their respective functions. Also, the SPD module **100** can be more cost-effectively manufactured.

In some embodiments, the springs **150, 160** together exert a spring force on the solder **148** in the range of from about 0.5 N to 1.5 N when the disconnect mechanism **140** is in the ready position.

In some embodiments, the module **100** is a Class I surge protective device (SPD). In some embodiments, the module 100 is compliant with IEC 61643-11 "Additional duty test for test Class I" for SPDs (Clause 8.3.4.4) based on the impulse discharge current waveform defined in Clause 8.1.1 of IEC 61643-11, typically referred to as 10/350 microsecond ("µs") current waveform ("10/350µs current waveform"). The 10/350µs current waveform may characterize a current wave in which the maximum current (100%) is reached at about 10 µs and the current is 50% of the maximum at about 350 µs. Under 10/350µs current waveform, the transferred charge, Q, and specific energy, W/R, to SPDs should be related with peak current according to one or more standards. For example, the IEC 61643-11 parameters to Class I SPD test are illustrated in Table 1, which follows:

**Table 1 Parameters for Class I SPD Test**

| *I*ᵢₘₚ within 50µs (kA) | Q within 5ms (As) | W/R within 5ms (kJ/Ω) |
|---|---|---|
| 25 | 12,5 | 156 |
| 20 | 10 | 100 |
| 12,5 | 6,25 | 39 |
| 10 | 5 | 25 |
| 5 | 2,5 | 6,25 |
| 2 | 1 | 1 |
| 1 | 0,5 | 0,25 |

It is desirable that the SPD modules have a small form factor. In particular, in some applications it is desirable that the SPD modules each have a size of 1TE according to DIN Standard 43871, published November 1, 1992. According to some embodiments, the module **100** has a maximum width **W9** (**FIG. 1**) parallel to the axis **F1-F1** of about 18 mm.

Modules including fail-safe mechanisms, alarm mechanisms and connector systems as disclosed herein may include an overvoltage clamping element of a different type in place of the varistor **132.** The overvoltage clamping element may be a transient voltage suppressor (TVS) such as a TVS-diode (e.g., a silicon avalanche diode (SAD)).

As discussed above, in some embodiments the springs **150, 160** are formed of metal and, in some embodiments, are formed of CuSn 0.15. By using metal springs **150,160**, the reliability and, thus, safety of the SPD module **100** is improved because the module **100** does not rely on operation of a plastic part (which could melt or jam) to push the thermal disconnector mechanism **140** into the open position. A metal spring **150, 160** can maintain its spring force at a much higher temperature than a plastic spring. Moreover, a CuSn 0.15 spring can maintain its spring force or characteristics at a much higher temperature (*e*.*g*., up to 400°C) than springs formed of other typical spring copper materials (*e*.*g*., Cu/ETP) that lose their spring characteristics at about 200°C.

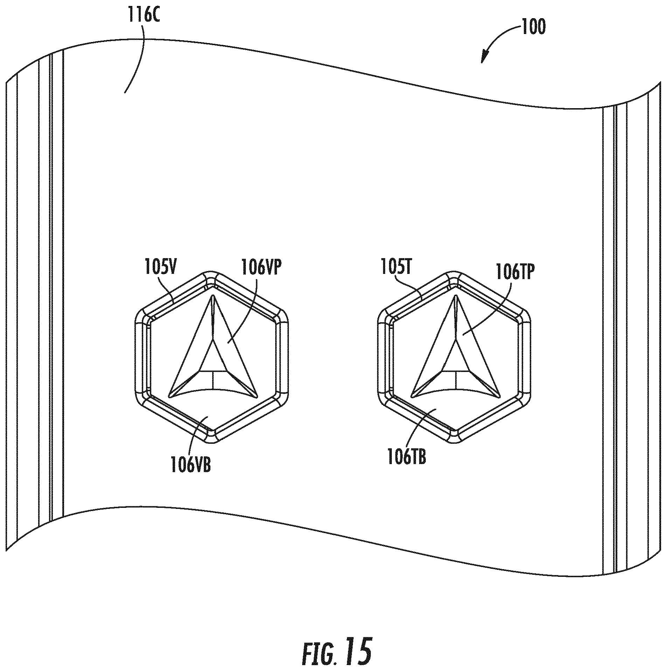

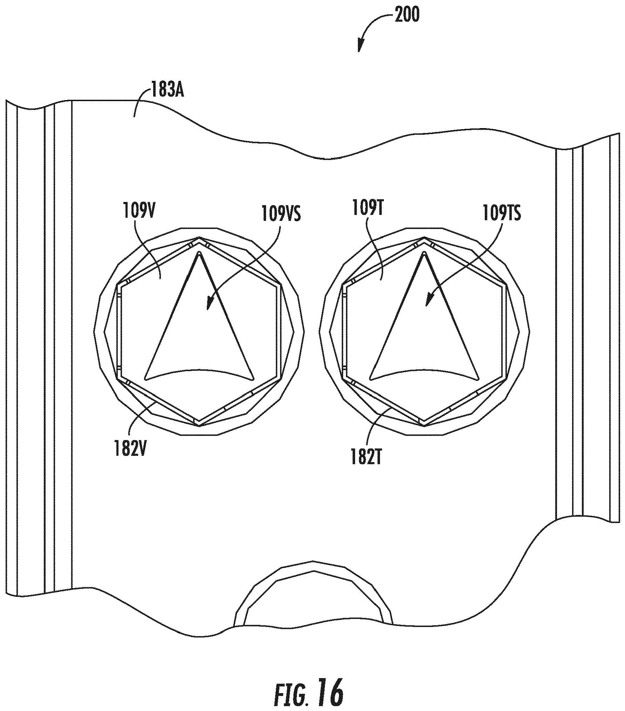

With reference to **FIGS. 8****,** **12****,** **13****,** **15** and **16**, the SPD system **103** may further employ a designator system to ensure that the SPD module and base are properly matched. The designator system includes the pin inserts **106V, 106T** and the socket inserts **109V, 109T.**

The pin insert **106V** includes a pin **106VP** and an integral base **106VB.** The base **106VB** is axially and rotationally fixed in position in the socket **105V.** The pin insert **106T** likewise includes a pin **106TP** and an integral base **106TB** fixed in the socket **105T.** In some embodiments and as shown, the bases **106VB, 106VT** and the sockets **105V, 105T** have complementary geometric shapes (e.g., faceted hexagonal). In some embodiments and as shown, the pin inserts **106V, 106T** are substantially identical.

Each pin **106VP, 106TP** has a rotationally asymmetric cross-sectional shape. In some embodiments, the cross-sectional shape is generally a non-equilateral triangle.

The socket inserts **109V, 109T** each include a respective base or body **109VB, 109TB** and a respective socket **109VS, 109TS** defined therein. The bases **109VB** and **109TB** are axially and rotationally fixed in the sockets **182V** and **182T,** respectively. In some embodiments and as shown, the bases **109VB, 109TB** and the sockets **182V, 182T** have complementary geometric shapes (e.g., faceted hexagonal). In some embodiments and as shown, the socket inserts **109V, 109T** are substantially identical.

The socket **109VS** has a rotationally asymmetric cross-sectional shape that is shaped to receive the pin 106VP in a single relative rotational orientation. Likewise, the socket **109TS** has a rotationally asymmetric cross-sectional shape that is shaped to receive the pin **106TP** in a single relative rotational orientation. In some embodiments, the shapes of the sockets **109VS, 109TS** are non-equilateral triangles.

Each base **200** will have two prescribed, designated characteristics:
1) a Maximum Continuous Operating Voltage Level (MCOV Level). For example, a given base **200** may be designed, adapted or rated for a nominal voltage of 120V AC and an MCOV Level of 150V, while another base **200** is rated for a nominal voltage of 240V AC and an MCOV Level of 300V. The MCOV Level of a given base **200** may be a function of the characteristics (e.g., VNOM) of its varistor **132;** and
2) a Type. For example, each base may be designed, adapted or rated for exactly one of AC or DC or neutral-protective earth (N-PE) or a Special Proprietary Technology.
Each module **100** will likewise have the same two prescribed, designated characteristics *(i.e.,* MCOV Level and Type).

The pin **106VP** serves as a voltage designation pin. The socket **109VS** serves as a voltage designator socket. The pin **106TP** serves as a type designator pin. The socket **109TS** serves as a type designator socket.

The pin **106VP** is rotationally oriented in a prescribed position corresponding to the designated MCOV Level of the module **100.** The socket **109VP** is likewise rotationally oriented in a prescribed position corresponding to the MCOV Level of the base **200.** The pin **106TP** is rotationally oriented in a prescribed position corresponding to the Type of the module **100.** The socket **109TS** is rotationally oriented in a prescribed position corresponding to the Type of the base **200.**

In practice, a complete SPD system **103** and SPD assembly **101** will include a base **200** and a matching (MCOV Level and Type) module **100.** The rotational orientations of the pins **106VP, 106TP** and the sockets **109VS, 109TS** are set so that the pin **106VP** can be easily inserted into the socket **109VS** and the pin **106TP** can be easily inserted into the socket **109TS** as the module **100** is inserted into the receiver slot **183D** and the contacts **166A, 168A** are inserted into the sockets **185B**.

When the SPD module **100** fails, the user may unplug the module **100** from the base **200** and plug a new module **100** into the base **200** since, in most cases, the base **200** is still intact and functional and it is not necessary to replace the base **200.** The new module **100** must be of the same MCOV Level and Type as the "old" (existing) base **200.** If the new module **100** is of the same MCOV Level and Type, its pins **106VP, 106TP** will be rotationally oriented in the same, correct positions to match the rotational orientations of the sockets **109VS, 109TS,** thereby permitting the new module **100** to be inserted into the receiver slot **183D** and the contacts **166A, 168A** to be inserted into the sockets **185B**.

On the other hand, if the user (or the manufacturer) attempts to insert a module **100** having a different MCOV Level and/or Type than the base **200,** one or both of the pins **106VP, 106TP** will prevent full insertion of the module **100** into the receiver slot **183D** sufficient to insert the contacts **166A, 168A** into the sockets **185B** because the rotational orientation mismatch *(i.e.,* relatively displaced rotational orientations) between the pin **106VP** and the socket **109VS** and/or between pin **106TP** and the socket **109TS** will block or prevent insertion of the pin(s) **106VP, 106TP** into the socket(s) **109VS, 109TS.** Thus, a module **100** with an MCOV Level of 150V cannot be P301369EP / EP17207945.1 (EP3401931) based on US 15/593,591 installed on a base **200** with a 300V MCOV Level. Similarly, a module **100** with a Type of AC cannot be installed on a base **200** with a DC Type.

In some embodiments and as mentioned above, the pin inserts **106VP, 106TP** are identical and the socket inserts **109VS, 109TS** are substantially identical so that it is only necessary to manufacture one shape of pin insert and one shape of socket insert. The pins and sockets are then differentiated and set in their appropriate prescribed orientations (corresponding to the MCOV Level and Type of the associated module or base) by selecting the rotational positions of the pin inserts **106V, 106T** in the sockets **105V, 105T** and selecting the rotational positions of the socket inserts **109V, 109T** in the sockets **182V, 182T.** It will be appreciated that in the illustrated embodiment, as many as six different positions are possible for each insert in the hexagonal sockets.

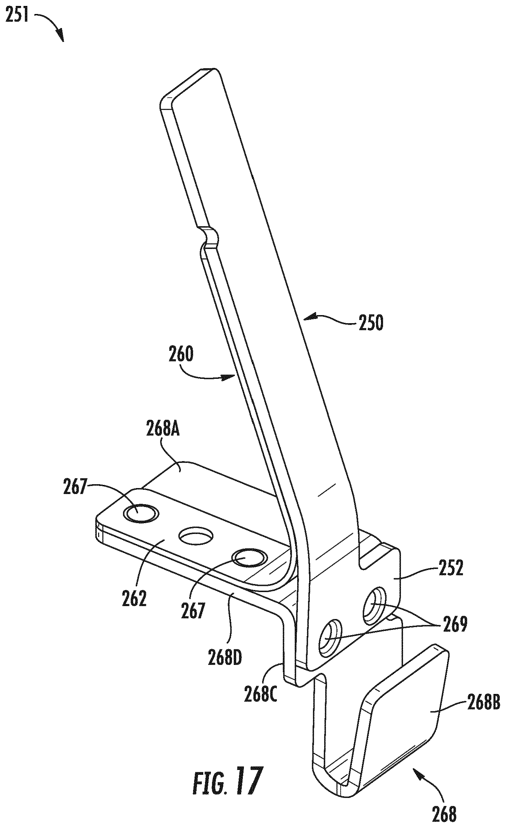

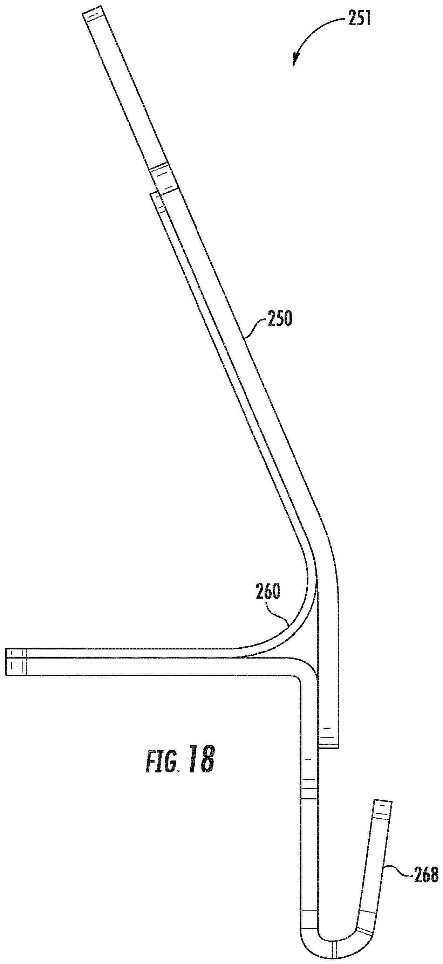

With reference to **FIGS. 17** and **18****,** a spring/contact assembly **251** according to further embodiments of the invention is shown therein. The spring/contact assembly **251** may be used in place of the spring/contact assembly **151** in the SPD module **100.**

The spring/contact assembly **251** includes a second contact member **268,** a disconnect spring **250** and a supplemental spring **260** generally corresponding to the second contact member **168,** the spring **150,** and the spring **160,** respectively. The spring **250** differs from the spring **150** in that the spring **250** includes a base leg **252** that extends rearwardly instead of laterally.

The second electrical contact member **268** includes a base **268A** and an integral U-shaped terminal connector **268B.** The base leg **262** of the supplemental spring **260** is secured to a front section **268D** of the base **268A** by TOX rivets or clinching joints **267.** The base leg **252** of the disconnect spring **250** is secured to a leg **268C** of the base **268A** by TOX rivets or clinching joints **269.** The springs **250, 260** and the contact member **268** thus assembled collectively form the spring/contact subassembly **251.**

The spring/contact assembly **251** may be less expensive to manufacture than the spring/contact assembly **151.**

## Claims

1. A surge protective device (SPD) module (100) comprising:
a module housing (110);
first and second module electrical terminals (166A, 168A) mounted on the module housing;
an overvoltage clamping element (132) electrically connected between the first and second module electrical terminals; and
a thermal disconnector mechanism (140) positioned in a ready configuration, wherein the overvoltage clamping element is electrically connected with the second module electrical terminal, the thermal disconnector mechanism being repositionable to electrically disconnect the overvoltage clamping element from the second module electrical terminal, the thermal disconnector mechanism including:
an electrode (136) electrically connected to the overvoltage clamping element;
a disconnect spring (150) elastically deflected and electrically connected to the electrode in the ready configuration;
a solder (148) securing the disconnect spring in electrical connection with the electrode in the ready configuration; and
a heat sink member (142) thermally interposed between the electrode and the solder, the heat sink
member having a thermal capacity;
wherein the solder is meltable in response to overheating of the overvoltage clamping element;
wherein the disconnect spring is configured to electrically disconnect the overvoltage clamping element from the second module electrical terminal when the solder is melted; and
wherein the thermal capacity of the heat sink member buffers and dissipates heat from the overvoltage clamping element to prevent the solder from melting in response to at least some surge currents through the SPD module;
**characterized in that** the electrode includes:
a base portion (136B) engaging the overvoltage clamping element; and
an integral upstanding termination tab (138) connecting the base portion to the heat sink member.

2. The SPD module of Claim 1 wherein the thermal capacity of the heat sink member is in the range of from about 0.2 to 2.0 J/K and/or at least about 0.15 times a thermal capacity of the electrode.

3. The SPD module of Claim 1 or Claim 2 wherein the overvoltage clamping element is a varistor.

4. The SPD module of any preceding claim wherein:
the heat sink member is affixed to the electrode, optionally by rivets (144); and
the solder directly engages the heat sink member.

5. The SPD module of any preceding claim wherein:
the SPD module includes a support frame (114); and
the support frame includes an integral support feature (124) configured to resist displacement of the heat sink member relative to the disconnect spring.

6. The SPD module of any preceding claim including a supplemental spring (160), wherein, in the ready configuration, the supplemental spring:
is electrically connected to the electrode;
applies a spring load to the disconnect spring; and
provides thermal capacity to cool the disconnect spring.

7. The SPD module of any preceding claim wherein the disconnect spring is formed of a material having a softening temperature greater than 300 °C.

8. The SPD module of any preceding claim wherein the thermal disconnector mechanism includes:
a first fail-safe mechanism (102) including the solder and a contact portion (154B) of the disconnect spring (150) engaging the solder; and
a second fail-safe mechanism (104) including a weak region (156) in the disconnect spring between the contact portion and a proximal portion (154A) of the disconnect spring, wherein the disconnect spring is configured to break at the weak region in response to a current through the disconnect spring.

9. The SPD module of Claim 8 wherein the weak region (156) has a reduced cross-sectional area compared to a cross-sectional area of the proximal portion.

10. The SPD module of Claim 8 including a supplemental spring (160) that applies a spring load to the proximal portion.

11. The SPD module of any preceding claim including a contact member (168), wherein:
the contact member includes the second module terminal (168A); and
the disconnect spring is affixed to the contact member, optionally by clinching.

12. The SPD module of any preceding claim including an indicator mechanism (170) configured to provide an alert that the SPD module has failed when the thermal disconnector mechanism disconnects the overvoltage clamping element from the second module electrical terminal.

13. The SPD module of Claim 12 wherein the indicator mechanism includes a local alert mechanism (170A) including:
a window (112B) in the module housing;
an indicator member (174) movable between a ready position and an indicating position relative to the window; and
an indicator spring (176) configured to force the indicator member from the ready position to the indicating position when the thermal disconnector mechanism disconnects the overvoltage clamping element from the second module electrical terminal.

14. The SPD module of Claim 12 or 13 wherein the indicator mechanism includes a remote alert mechanism (170B) including:
a switch opening (122) in the module housing to receive a switch pin (188A) from an external base assembly;
a blocking member (172G) covering the switch opening; and
an indicator spring (176) configured to force the blocking member away from the switch opening when the thermal disconnector mechanism disconnects the overvoltage clamping element from the second module electrical terminal to permit the switch pin to extend through the switch opening.

## Patentansprüche

1. Überspannungsschutzvorrichtungs(SPD)-Modul (100), das Folgendes umfasst:
ein Modulgehäuse (110);
einen ersten und einen zweiten elektrischen Modulanschluss (166A, 168A), die an dem Modulgehäuse angebracht sind;
ein Überspannungsklemmelement (132), das zwischen dem ersten und dem zweiten elektrischen Modulanschluss elektrisch angeschlossen ist; und
einen Thermotrennschaltermechanismus (140), der in einer Bereitschaftskonfiguration positioniert ist, wobei das Überspannungsklemmelement mit dem zweiten elektrischen Modulanschluss elektrisch verbunden ist, wobei der Thermotrennschaltermechanismus umpositionierbar ist, um das Überspannungsklemmelement von dem zweiten elektrischen Modulanschluss elektrisch zu trennen, wobei der Thermotrennschaltermechanismus Folgendes umfasst:
eine Elektrode (136), die mit dem Überspannungsklemmelement elektrisch verbunden ist;
eine Trennfeder (150), die in der Bereitschaftskonfiguration elastisch ausgelenkt und mit der Elektrode elektrisch verbunden ist;
ein Lot (148), das die Trennfeder in der Bereitschaftskonfiguration in elektrischer Verbindung mit der Elektrode fixiert; und
ein Wärmesenkenglied (142), das thermisch zwischen der Elektrode und dem Lot angeordnet ist, wobei das Wärmesenkenglied eine Wärmekapazität aufweist;
wobei das Lot als Reaktion auf das Überhitzen des Überspannungsklemmelements schmelzbar ist;
wobei die Trennfeder dazu konfiguriert ist, das Überspannungsklemmelement von dem zweiten elektrischen Modulanschluss elektrisch zu trennen, wenn das Lot geschmolzen ist; und
wobei die Wärmekapazität des Wärmesenkenglieds Wärme von dem Überspannungsklemmelement speichert und abführt, um das Schmelzen des Lots als Reaktion auf mindestens einige Spitzenströme durch das SPD-Modul zu verhindern;
**dadurch gekennzeichnet, dass** die Elektrode Folgendes umfasst:
einen Basisabschnitt (136B), der sich mit dem Überspannungsklemmelement im Eingriff befindet; und
eine integrierte aufrechte Abschlusslasche (138), die den Basisabschnitt mit dem Wärmesenkenglied verbindet.

2. SPD-Modul nach Anspruch 1, wobei die Wärmekapazität des Wärmesenkenglieds im Bereich von etwa 0,2 bis 2,0 J/K und/oder mindestens etwa das 0,15-fache einer Wärmekapazität der Elektrode beträgt.

3. SPD-Modul nach Anspruch 1 oder Anspruch 2, wobei es sich bei dem Überspannungsklemmelement um einen Varistor handelt.

4. SPD-Modul nach einem der vorangehenden Ansprüche, wobei:
das Wärmesenkenglied an der Elektrode befestigt ist, optional mit Nieten (144); und
sich das Lot direkt mit dem Wärmesenkenglied im Eingriff befindet.

5. SPD-Modul nach einem der vorangehenden Ansprüche, wobei:
das SPD-Modul einen Stützrahmen (114) umfasst; und
der Stützrahmen ein integriertes Stützmerkmal (124) umfasst, das dazu konfiguriert ist, der Verschiebung des Wärmesenkenglieds relativ zu der Trennfeder zu widerstehen.

6. SPD-Modul nach einem der vorangehenden Ansprüche, umfassend eine Zusatzfeder (160), wobei in der Bereitschaftskonfiguration die Zusatzfeder:
elektrisch mit der Elektrode verbunden ist;
eine Federbelastung auf die Trennfeder aufbringt; und
Wärmekapazität zum Kühlen der Trennfeder bereitstellt.

7. SPD-Modul nach einem der vorangehenden Ansprüche, wobei die Trennfeder aus einem Material mit einer Erweichungstemperatur von mehr als 300 °C gebildet ist.

8. SPD-Modul nach einem der vorangehenden Ansprüche, wobei der Thermotrennschaltermechanismus Folgendes umfasst:
einen ersten Ausfallsicherungsmechanismus (102), umfassend das Lot und einen Kontaktabschnitt (154B) der Trennfeder (150), der sich mit dem Lot im Eingriff befindet; und
einen zweiten Ausfallsicherungsmechanismus (104), umfassend eine Schwächeregion (156) in der Trennfeder zwischen dem Kontaktabschnitt und einem proximalen Abschnitt (154A) der Trennfeder, wobei die Trennfeder dazu konfiguriert ist, als Reaktion auf einen Strom durch die Trennfeder an der Schwächeregion zu brechen.

9. SPD-Modul nach Anspruch 8, wobei die Schwächeregion (156) verglichen mit einer Querschnittsfläche des proximalen Abschnitts eine verringerte Querschnittsfläche aufweist.

10. SPD-Modul nach Anspruch 8, umfassend eine Zusatzfeder (160), die eine Federbelastung auf den proximalen Abschnitt aufbringt.

11. SPD-Modul nach einem der vorangehenden Ansprüche, umfassend ein Kontaktglied (168), wobei:
das Kontaktglied den zweiten Modulanschluss (168A) umfasst; und
die Trennfeder an dem Kontaktglied befestigt ist, optional durch Falzen.

12. SPD-Modul nach einem der vorangehenden Ansprüche, umfassend einen Anzeigemechanismus (170), der dazu konfiguriert ist, eine Warnung bereitzustellen, dass das SPD-Modul versagt hat, wenn der Thermotrennschaltermechanismus das Überspannungsklemmelement von dem zweiten elektrischen Modulanschluss trennt.

13. SPD-Modul nach Anspruch 12, wobei der Anzeigemechanismus einen lokalen Warnmechanismus (170A) umfasst, der Folgendes umfasst:
ein Fenster (112B) in dem Modulgehäuse;
ein Anzeigeglied (174), das zwischen einer Bereitschaftsstellung und einer Anzeigestellung relativ zu dem Fenster bewegbar ist; und
eine Anzeigefeder (176), die dazu konfiguriert ist, das Anzeigeglied aus der Bereitschaftsstellung in die Anzeigestellung zu zwingen, wenn der Thermotrennschaltermechanismus das Überspannungsklemmelement von dem zweiten elektrischen Modulanschluss trennt.

14. SPD-Modul nach Anspruch 12 oder 13, wobei der Anzeigemechanismus einen Fernwarnmechanismus (170B) umfasst, der Folgendes umfasst:
eine Schalteröffnung (122) in dem Modulgehäuse, um einen Schalterstift (188A) von einer externen Basisanordnung aufzunehmen;
ein Sperrglied (172G), das die Schalteröffnung abdeckt; und
eine Anzeigefeder (176), die dazu konfiguriert ist, das Sperrelement von der Schalteröffnung weg zu zwingen, wenn der Thermotrennschaltermechanismus das Überspannungsklemmelement von dem zweiten elektrischen Modulanschluss trennt, um zu ermöglichen, dass sich der Schalterstift durch die Schalteröffnung erstreckt.

## Revendications

1. Module de dispositif de protection contre les surtensions (SPD) (100) comprenant :
un boîtier de module (110) ;
des première et seconde bornes électriques de module (166A, 168A) montées sur le boîtier de module ;
un élément de calage de surtension (132) connecté électriquement entre les première et seconde bornes électriques de module ; et
un mécanisme de déconnexion thermique (140) positionné dans une configuration prête à l'emploi, dans lequel l'élément de calage de surtension est connecté électriquement à la seconde borne électrique de module, le mécanisme de déconnexion thermique étant repositionnable pour déconnecter électriquement l'élément de calage de surtension de la seconde borne électrique de module, le mécanisme de déconnexion thermique comportant :
une électrode (136) connectée électriquement à l'élément de calage de surtension ;
un ressort de déconnexion (150) déformé élastiquement et connecté électriquement à l'électrode dans la configuration prête à l'emploi ;
une soudure (148) fixant le ressort de déconnexion en connexion électrique avec l'électrode dans la configuration prête à l'emploi ; et
un élément dissipateur thermique (142) intercalé thermiquement entre l'électrode et la soudure, l'élément dissipateur thermique ayant une capacité thermique ;
dans lequel la soudure peut être fondue en réponse à une surchauffe de l'élément de calage de surtension ;
dans lequel le ressort de déconnexion est configuré pour déconnecter électriquement l'élément de calage de surtension de la seconde borne électrique de module quand la soudure est fondue ; et
dans lequel la capacité thermique de l'élément dissipateur thermique tamponne et dissipe la chaleur émanant de l'élément de calage de surtension pour empêcher la soudure de fondre en réponse au passage d'au moins certains courants de surtension à travers le module SPD ;
**caractérisé en ce que** l'électrode comporte :
une partie de base (136B) en prise avec l'élément de calage de surtension ; et
une languette de terminaison verticale intégrée (138) connectant la partie de base à l'élément dissipateur thermique.

2. Module SPD selon la revendication 1 dans lequel la capacité thermique de l'élément dissipateur thermique est comprise dans la plage d'environ 0,2 à 2,0 J/K et/ou est au moins environ 0,15 fois une capacité thermique de l'électrode.

3. Module SPD selon la revendication 1 ou la revendication 2 dans lequel l'élément de calage de surtension est une varistance.

4. Module SPD selon n'importe quelle revendication précédente dans lequel :
l'élément dissipateur thermique est fixé à l'électrode, facultativement par des rivets (144) ; et
la soudure est directement en prise avec l'élément dissipateur thermique.

5. Module SPD selon n'importe quelle revendication précédente dans lequel :
le module SPD comporte un cadre de support (114) ; et
le cadre du support comporte une caractéristique de support intégrée (124) configurée pour résister au déplacement de l'élément dissipateur thermique par rapport au ressort de déconnexion.

6. Module SPD selon n'importe quelle revendication précédente comportant un ressort supplémentaire (160), dans lequel, dans la configuration prête à l'emploi, le ressort supplémentaire :
est connecté électriquement à l'électrode ;
applique une charge de ressort au ressort de déconnexion ; et
fournit une capacité thermique pour refroidir le ressort de déconnexion.

7. Module SPD selon n'importe quelle revendication précédente dans lequel le ressort de déconnexion est formé d'un matériau ayant une température de ramollissement supérieure à 300 °C.

8. Module SPD selon n'importe quelle revendication précédente dans lequel le mécanisme de déconnexion thermique comporte :
un premier mécanisme de sécurité (102) comportant la soudure et une partie de contact (154B) du ressort de déconnexion (150) en prise avec la soudure ; et
un second mécanisme de sécurité (104) comportant une région affaiblie (156) dans le ressort de déconnexion entre la partie de contact et une partie proximale (154A) du ressort de déconnexion, dans lequel le ressort de déconnexion est configuré pour se rompre au niveau de la région affaiblie en réponse à un passage de courant à travers le ressort de déconnexion.

9. Module SPD selon la revendication 8 dans lequel la région affaiblie (156) a une superficie en coupe réduite en comparaison à une superficie en coupe de la partie proximale.

10. Module SPD selon la revendication 8 comportant un ressort supplémentaire (160) qui applique une charge élastique à la partie proximale.

11. Module SPD selon n'importe quelle revendication précédente comportant un élément de contact (168), dans lequel :
l'élément de contact comporte la seconde borne de module (168A) ; et
le ressort de déconnexion est fixé à l'élément de contact, facultativement par clinchage.

12. Module SPD selon n'importe quelle revendication précédente comportant un mécanisme indicateur (170) configuré pour avertir que le module SPD n'a pas fonctionné quand le mécanisme de déconnexion thermique déconnecte l'élément de calage de surtension de la seconde borne électrique de module.

13. Module SPD selon la revendication 12 dans lequel le mécanisme indicateur comporte un mécanisme d'alerte locale (170A) comportant :
une fenêtre (112B) dans le boîtier de module ;
un élément indicateur (174) déplaçable entre une position prête à l'emploi et une position d'indication relative à la fenêtre ; et
un ressort indicateur (176) configuré pour forcer l'élément indicateur de la position prête à l'emploi à la position d'indication quand le mécanisme de déconnexion thermique déconnecte l'élément de calage de surtension de la seconde borne électrique de module.

14. Module SPD selon la revendication 12 ou 13 dans lequel le mécanisme indicateur comporte un mécanisme d'alerte à distance (170B) comportant :
une ouverture de commutateur (122) dans le boîtier de module destinée à recevoir une broche de commutateur (188A) partant d'un ensemble de base externe ;
un élément de blocage (172G) recouvrant l'ouverture de commutateur ; et
un ressort indicateur (176) configuré pour forcer l'élément de blocage à s'écarter de l'ouverture de commutateur quand le mécanisme de déconnexion thermique déconnecte l'élément de calage de surtension de la seconde borne électrique de module pour permettre à la broche du commutateur de passer à travers l'ouverture de commutateur.
